(19) Europäisches Patentamt
European Patent Office
Office européen des brevets

(11) **EP 1 665 710 B1**

(12) **EUROPEAN PATENT SPECIFICATION**

(45) Date of publication and mention
of the grant of the patent:
**10.01.2007 Bulletin 2007/02**

(21) Application number: **04712526.5**

(22) Date of filing: **19.02.2004**

(51) Int Cl.:
**H04L 27/38** *(2006.01)*

(86) International application number:
**PCT/EP2004/001633**

(87) International publication number:
**WO 2005/027454 (24.03.2005 Gazette 2005/12)**

(54) **APPARATUS AND METHOD FOR ADAPTIVE ORTHOGONALITY CORRECTION**

VORRICHTUNG UND VERFAHREN ZUR ADAPTIVEN ORTHOGONALITÄTSKORREKTUR

APPAREIL ET PROCEDE DE CORRECTION ADAPTATIVE D'ORTHOGONALITE

(84) Designated Contracting States:
**DE GB**

(30) Priority: **15.09.2003 EP 03020903**

(43) Date of publication of application:
**07.06.2006 Bulletin 2006/23**

(73) Proprietor: **NTT DoCoMo INC.**
**Chiyoda-ku**
**Tokyo 100-6150 (JP)**

(72) Inventor: **DENNO, Satoshi**
**611-0011 Uji (JP)**

(74) Representative: **Zinkler, Franz et al**
**Schoppe, Zimmermann, Stöckeler & Zinkler**
**Postfach 246**
**82043 Pullach bei München (DE)**

(56) References cited:
**EP-A- 1 133 066**

• **CHAN C K ET AL INSTITUTE OF ELECTRICAL AND ELECTRONICS ENGINEERS: "FREQUENCY-DOMAIN IMPLEMENTATIONS OF THE CONSTANT MODULUS ALGORITHM" PROCEEDINGS OF THE ASILOMAR CONFERENCE ON SIGNALS, SYSTEMS AND COMPUTERS. PACIFIC GROVE, OCT. 30 - NOV. 1, 1989, NEW YORK, IEEE, US, vol. VOL. 2 CONF. 23, 30 October 1989 (1989-10-30), pages 663-669, XP000217204**
• **JABLON N K: "JOINT BLIND EQUALIZATION, CARRIER RECOVERY, AND TIMING RECOVERY FOR HIGH-ORDER QAM SIGNAL CONSTELLATIONS" IEEE TRANSACTIONS ON SIGNAL PROCESSING, IEEE, INC. NEW YORK, US, vol. 40, no. 6, 1 June 1992 (1992-06-01), pages 1383-1397, XP000305227 ISSN: 1053-587X**
• **NISHIMORI K ET AL: "PERFORMANCE ANALYSIS OF CMA ADAPTIVE ARRAY FOR QAM SIGNALS" ELECTRONICS & COMMUNICATIONS IN JAPAN, PART I - COMMUNICATIONS, SCRIPTA TECHNICA. NEW YORK, US, vol. 80, no. 11, PART 1, 1 November 1997 (1997-11-01), pages 11-21, XP000723645 ISSN: 8756-6621**

**Description**

The present invention is in the field of adaptive signal processing and, in particular, in the field of an adaptive error reduction in an input signal.

Today, many radio communication systems such as GSM in (global system for mobile communication) have been provided, and many new radio systems are ready to be launched. Each of the communication systems provides a subset of services, which are different from services provided by other systems in order to fulfil the needs of the subscribers. For instance, a service area of GSM is complementarily different from that of for example PDC (Personal Digital Cellular) although the GSM has a transmission rate, which is similar to that of PDC. On the other hand, systems like IMT (International Mobile Telecommunications) or UMTS (Universal Mobile Telecommunication System) have a higher transmission rate than the transmission rate of GSM. Furthermore, a service area of these two systems will overlap with a service area of GSM and PDC. In other words, each system has advantages, so that a radio telecommunication system including the properties of a plurality of communication systems would be superior to a particular communication system included therein.

Parallel to the mentioned radio communication systems, currently, a plurality of wired communication systems is provided. Among others, ISDN (Integrated Services Digital Network) and ADSL (Asymmetrical Digital Subscriber Line) have achieved a considerable importance. However, also in this case, it would be useful to combine several wired systems and implement these systems within one terminal. Moreover, in case several communication systems can be merged together, the resulting equipment could also be applied to do for example a perception of future emerging systems signals. Conventionally, a signal corresponding to one of a plurality of transmission systems may be received, when a receiver combines a plurality of receivers, which can be, for example, implemented in mobile terminals and base stations.

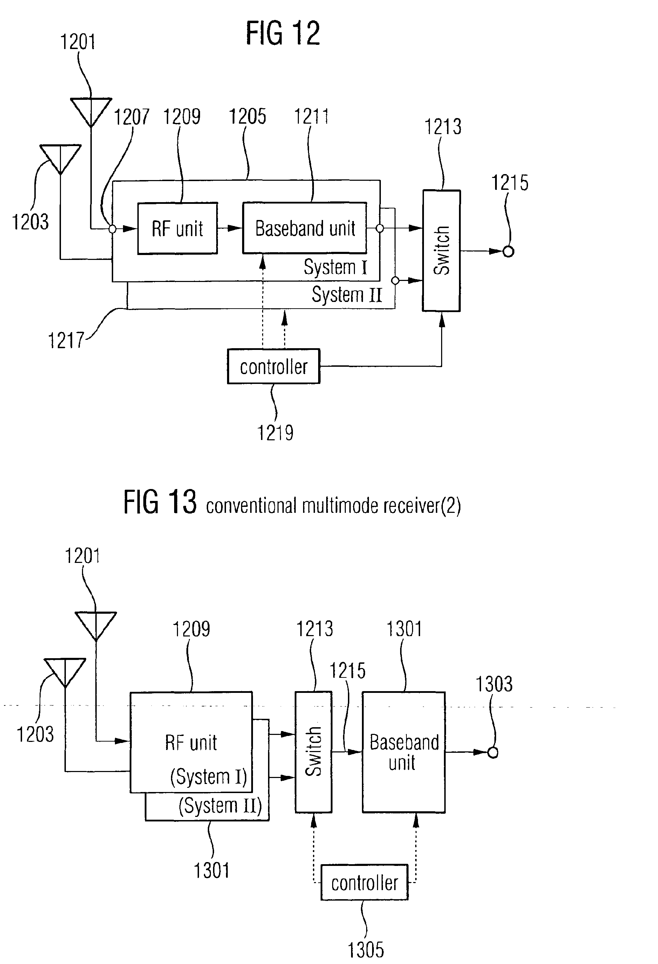

In Fig. 12, in the example of a receiver being able to receive signals associated with two radio network systems is shown.

The conventional receiver of Fig. 12 comprises a first antenna 1202 and a second antenna 1203. The first antenna 1201 and the second antenna 1203 are used for receiving two kinds of signals being transmitted over two networks. Signals received at the first antenna 1201 are fed to a receiver 1205 via an input terminal 1207. In the receiver 1205, the input signals are demodulated by a radio frequency unit (RF unit) 1209 and a base band unit 1211. A base band unit has an output coupled to a switch 1213 having an output 1215.

A received signal associated with the second network is provided to a receiver 1217 (system 2) having an identical structure to that of the receiver 1205. Hence, a corresponding demodulated signal also is provided to the switch 1213. Moreover, the receiver of Fig. 12 comprises a control unit 1219, which is operative to select the receiver to be used for demodulating the received signals. For example, the control unit 1219 may be controlled by a user selecting a suitable network. The switch 1203 provides at the output terminal 1215 the selected signal, which can further be processed in order to detect the information transmitted via the corresponding network.

For convenience, components appearing in the following figures that are similar to components already discussed are assigned to the same reference numbers, and different components are assigned different reference numbers.

Fig. 13 shows a further embodiment of a conventional multi-mode receiver.

The receiver shown in Fig. 13 comprises the first antenna 1201 coupled to the RF unit 1209 having an output coupled to the switch 1213. The second antenna 1203 coupled to a RF unit 1301 having an output connected to the switch 1213.

The output 1215 (output terminal of the switch 1213) is coupled to a base band unit 1301 having an output 1303. Furthermore, the receiver shown in Fig. 13 comprises a controller 1305 controlling the operation of the switch 1213 and the operation of the base band unit 1301.

The receiver shown in Fig. 13 has only two RF units required for receiving the signals corresponding to the two different networks. The received signals at the antennas 1201 and 1203 are provided to the respective RF units 1209 and 1301. The output signals provided via the outputs of the RF units 1209 and 1301 are provided to the switch 1203 being controlled by the controller (control unit) 1305. Depending on the selected system, one of the output signals of the RF unit 1209 or of the RF unit 1201 is wired through the output terminal 1215 of the switch 1213. Unlike the receiver of Fig. 12, the conventional receiver shown in Fig. 13 comprises only one base band unit 1301, so that a power consumption of the receiver shown in Fig. 13 is reduced with respect to a power consumption of the receiver shown in Fig. 12. However, the receivers shown in Fig. 12 and 13 can only be applied to receiving signals coming from two predetermined radio network systems which result in a reduced flexibility of perception of future emerging systems signals. This is due to the fact that the receiver shown in Figs. 12 and 13 has separate radio frequency units determining signals provided to a base band signal-processing unit.

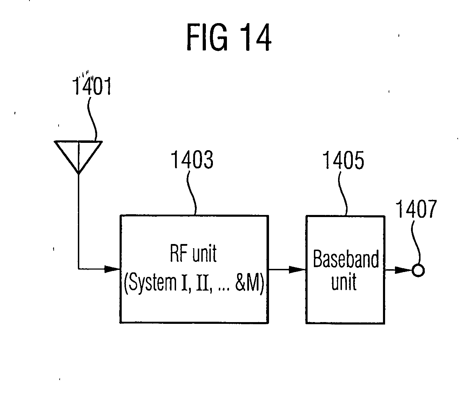

The above indicated disadvantages may be overcome, when a communication receiver comprises only one signal chain consisting of one radio frequency unit and of one base band unit for receiving signals associated with several radio network systems. Fig. 14 shows an embodiment of a multi-mode receiver comprising a receive antenna 1401 having an output coupled to a RF unit 1403 being able to receive signals associated with M systems. The RF unit 1403 has an output connected to a base band unit 1405 having an output terminal 1407.

Basically, the configuration of Fig. 14 has a structure which is comparable to a conventional receiver structure being able to demodulate signals coming from only one network, for example from a GSM network. However, the device shown in Fig. 14 is able to inter operate with each of the systems 1 to M. Hence, the signals associated with the several systems received at the antenna 1401 are fed to the RF unit 1403 where the signals are down converted. The output signals provided by the RF unit 1403 are provided to the base band unit 1405, where the user or system signals are separated from the input signal. Finally, the separated signals are provided via the output terminal 1407. However, the receiver shown in Fig. 14 suffers from a poor transmission performance, since a plurality of signals included in the received signal interfere with each other. These interferences reduce the systems performance, so that a bit error rate increases. In order to avoid the performance loss, a radio frequency filter may be installed to remove the interfering signals having carrier frequencies located out of the desired frequency bands. However, such a radio frequency filter, although improving the performance, reduces the receiver's flexibility with respect to receiving a plurality of signals associated with a plurality of systems applying conventional transmission schemes. For example, even if a frequency response of a radio frequency filter would be electrically changeable, the signals associated with a plurality of systems, possibly having different carrier frequencies, may be received. However, such an electrical switchable (variable) radio frequency filter suffers from a high power consumption and increased size, so that an essential requirement of mobile communication systems is not met. Additionally, an electrically variable radio frequency filter also requires high voltage supply. A possible solution to the above-indicated problem is to widen a pass band of a radio frequency filter or to remove a radio frequency filter in the receiver. Additionally, the interferences as described above may be cancelled using cancellation techniques in order to achieve a higher transmission performance. However, the conventional cancellation techniques suffer from high complexity.

Since the transmit signals to be transmitted are up converted to the radio frequency band in a transmitter, the received signals have to be down-converted to the base band in order to detect the transmitted information. Conventionally, two kinds of down conversion schemes are known: a heterodyne receiver and a direct conversion receiver (direct conversion scheme).

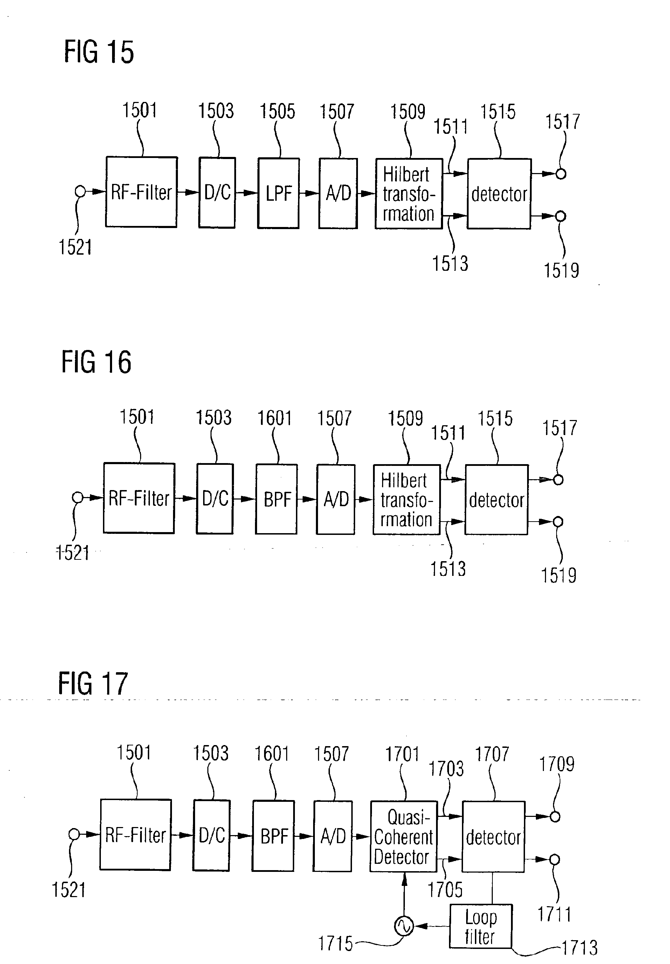

Fig. 15 shows a block diagram of a direct conversion receiver. The receiver has a radio frequency filter 1505 (RF filter) having an input and an output. The output of the RF filter 1501 i's connected with an input of a down converter (D/C) 1503. The down-converter 1503 has an output coupled to a low pass filter 1505 (LPF). The low pass filter 1505 has an output connected to an analogue digital converter 1507 (A/D-converter). The analogue digital converter 1507 has an output connected to a Hilbert transformer 1509 having a first output 1511 and a second output 1513. The outputs of the Hilbert transformer 1511 are coupled to a detector 1515 having a first output 1517 and a second output 1519.

The signals received via an antenna are provided to the RF filter 1501 via an input terminal 1521. The output signals of the RF filter 1501 are provided to the down converter 1503 being operative to convert the RF input signals into the base band. After filtering, the signals are provided to the analogue digital converter 1507 being operative to provide an in-phase (I) signal and a quadrature signal (Q) by means of a Hilbert transformation. The I/Q signals are provided via the output of the Hilbert transformer 1509 to the detector 1515 being operative to completely remove the carrier frequency components from the input signals. Hence, the outputs of the detector 1515 provide output signals as a regeneration of a transmitted signal being collapsed by an average white Gaussian noise (AWGN) and interference associated with multi-path characteristics of the radio channel.

However, a disadvantage of the receiver scheme depicted in Fig. 15 is that the output signal provided by the down-converter 1503 suffers from huge direct current generated in the radio frequency circuits. As long as digital frequency modulation (FM) is applied as a modulation scheme, the direct current appearing the base band can easily be removed, since the information is coded by the means of frequency variations. However, it is impossible to remove the direct current, when for example phase shift (PSK) or quadrature amplitude modulation (QAM) are applied. However, n digital mobile communication systems, PSK and QAM modulation schemes are widely used, since these schemes are characterized by a high bandwidth efficiency.

Fig. 16 shows an embodiment of a traditional heterodyne receiver. The received signals are provided to the RF filter 1501 through the input terminal 1521. After filtering, a down conversion is performed, wherein the down-converter 1503 is operative to convert the radio frequency signals into an intermediate frequency band (IF). The intermediate frequency signals provided by the down converter 1503 are fed to a band pass filter 1601 being operative to perform an intermediate frequency filtering. After filtering, the signals are analogue to digital converted and provided to the Hilbert transformer 1509 providing two intermediate frequency quadrature signals to the detector 1515. Contrary to the receiver structure shown in Fig. 15, the direct current can easily be removed by the band pass filter 1601. Therefore, the above-indicated problems associated with the direct currents are overcome. For this reason, the heterodyne receiver structures are widely used in the current communication systems.

Fig. 17 shows a further embodiment of a heterodyne receiver applying a Costa's loop. Unlike the receiver shown in Fig. 16, the embodiment in Fig. 17 comprises a quasi coherent detector 1701 coupled to the output of the analogue to digital converter 1507. The quasi coherent detector has a first output 1703 and a second output 1705, both outputs being coupled to a detector 1707. The detector has a first output 1709 and a second output 1711. Furthermore, the detector 1707 has a further output, to which a loop filter 1713 is coupled. The loop filter 1713 has an output connected to an oscillator 1715 having an output coupled to an input of the quasi-coherent detector 1701.

The receiver of Fig. 17 has a heterodyne down conversion scheme comprising the input terminal 1521, the RF filter 1501, the down converter 1503, the band pass filter 1601 and analogue to digital converter 1507. Additionally, the receiver comprises a Costa's type coherent detector including the quasi coherent detector 1701, the detector 1707, the loop filter 1713 and the oscillator 1715, which is a electrically controlled oscillator. The detector 1707 calculates an error between a detector input signal and the hard decision data provided by the detector 1707. The error is fed back to the oscillator 1715 via the loop filter 1713. The oscillator 1715 generates a sinusoidal wave with a certain intermediate frequency. Therefore, the loop is composed of the quasi-coherent detector 1701, the detector 1707, the loop filter 1713, and the oscillator 1715 which may be regarded as a phase locked loop (PLL), so that an accurate phase synchronization may be achieved. Since the input signal can be down-converted by the sinusoidal wave provided by the oscillator 1715 synchronizing the received signal, the detector output signal has characteristics associated with a coherence detection scheme.

However, if the pass bandwidth of the RF filter 1501 is widened in a receiver in order to achieve flexibility with respect to reception of signals associated with different transmission schemes, the heterodyne receiver will suffer from an image frequency interference.

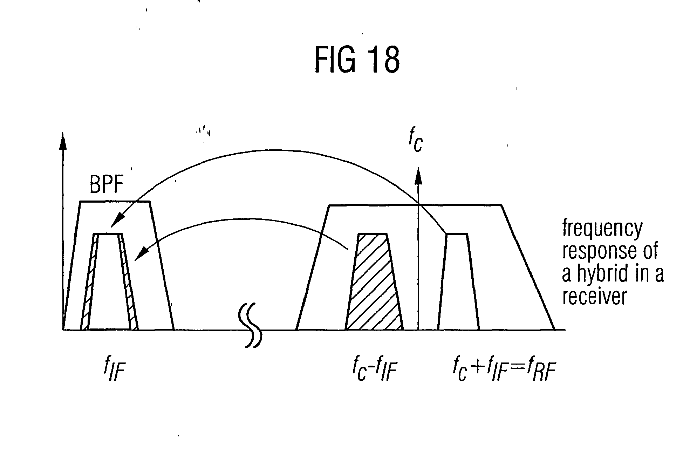

Fig. 18 shows a diagram of a resulting spectrum when a heterodyne scheme is applied in a receiver without using a radio frequency filter. Referring to Fig. 18, $f_{RF}$ $f_{IF}$ and $f_c$ indicate a radio frequency carrier frequency, an IF frequency, and a frequency of a sinusoidal wave applies during the first down conversion, respectively. When a signal having a carrier frequency $f_{RF} = f_c + f_{IF}$ is down-converted by multiplying a sinusoidal wave having a frequency $f_c$, and then the down converted signal has an intermediate frequency $f_{IF}$. However, the signal in the image band $f_c - f_{IF}$ is also simultaneously down-converted when the sinusoidal wave is applied for down-conversion. The down-converted signal has a carrier frequency $- f_c$. Since the signals provided to the down converter are real valued, the signal having carrier frequencies $f_c$ cannot be distinguished from the signal having the carrier frequency $- f_c$. As depicted in Fig. 18, the signal having a carrier frequency $f_c$ is overlapped by a signal with the carrier frequency $- f_c$. In other words, the desired signal having the carrier frequency $f_c$ is interfered by the undesired signal having a carrier frequency $-f_c$. Hence, the output signal suffers from an error due to the image spectrum interference. Chan, C. K. et al. disclose in "Frequency-Domain Implementations of the Constant Modulus Algorithm", published in the Proceedings of the Asilomar Conference on Signals, Systems, and Computers, Pacific Grove, October 30, to November 1, 1989, New York, IEEE, US, Vol. 2, Conference 23, 30 October 1989 (1989-10-30), pages 663-669, that the constant modulus algorithm (CMA) is one method of blind equalization that compensates for channel distortion in digital communication systems. In this conference paper, several efficient block implementations of CMA are presented that are based on frequency-domain techniques. These techniques implement either a linear or circular convolution, and they use discrete Fourier transform (DFT) filter banks and multi-rate signal processing.

It is the object of the present invention to provide an efficient concept for removing an error in a receive signal.

This object is achieved by an apparatus for adaptively correcting an error in an input signal in accordance with claim 1 or by a receiver apparatus in accordance with claim 11 or by a method for adaptively correcting an error in an input signal in accordance with claim 12 or by a method for processing a receive signal in accordance with claim 13, or by a computer program in accordance with claim 14.

The present invention is based on the finding that the error resulting from the image spectrum interference may adaptively be removed when, prior to down conversion, the real valued receive signal is transformed into a complex valued input signal, wherein a real part of the input signal is a in-phase (I) component derived from the receive signal, and wherein an imaginary component of the input signal is a quadrature component derived from the receive signal.

In particular, it has been found that the error associated with the down conversion scheme may completely be reduced when the real part of the input signal and the imaginary part of the input signal are perfectly orthogonal with respect to each other. However, during the orthogonalization procedure performed for obtaining the I and Q components from the receive signal, an orthogonality error may occur when the real part is not perfectly orthogonal to the imaginary part. After applying a down-conversion scheme to such an erroneous input signal, a down-converted signal suffers from an interference error induced by the orthogonality loss between the components of the input signal. It has been further found that this orthogonality error can adaptively be removed by weighting the input signal with a set of coefficients, wherein the set of coefficients may adaptively be determined, so that the orthogonality error is reduced.

In order to adaptively determine the coefficients of the set of coefficients, preferably a blind adaptation scheme may be applied for determining the set of coefficients. Blind adaptation schemes exploit only the information provided by the receive signal for performing the adaptation process, as described in Simon Haykin, Adaptive Filter Theory, 4th Edition, Prentice Hall, 2002.

The inventive concept is preferably applied in multi mode receivers of radio communication systems. Additionally, the present invention provides a possibility to apply blind interference cancellation scheme in multi-carrier systems.

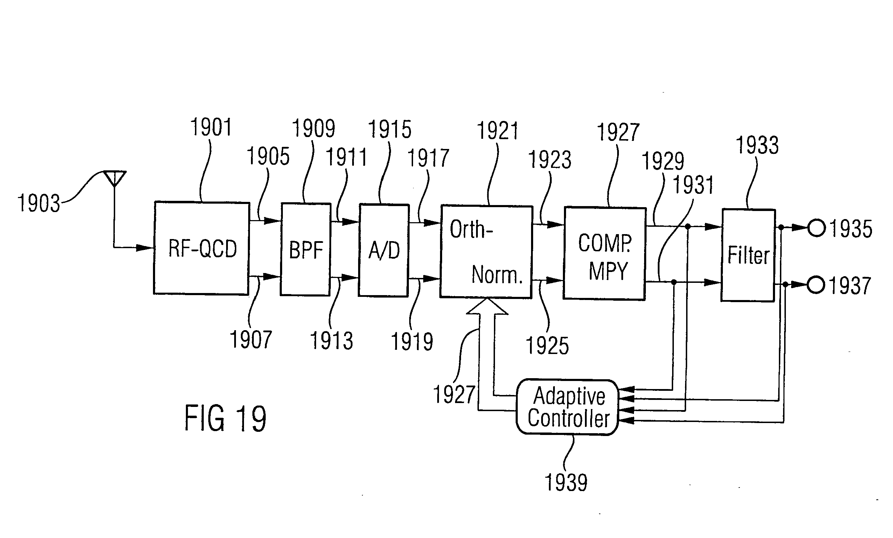

Fig. 19 shows an image signal canceller applying a blind adaptation algorithm. The image signal canceller comprises a quasi-coherent detector 1901 in a radio frequency band, wherein the quasi-coherent detector 1901 has an input 1903, a first output 1905 and a second output 1907. The first output 1905 and the second output 1907 are coupled to a band pass filter 1909 having a first output 1911 and a second output 1913. The first output 1911 and the second 1913 of the band pass filter 1909 are coupled to a analogue to digital converter 1915 having a first output 1917 and a second output 1919. The outputs of the analogue to digital converter are coupled to an ortho-normalizer 1921 having a first output 1923, a second output 1925, and a further input 1927. The first output 1923 and the second output 1925 of the ortho-normalizer 1921 are coupled to a complex multiplier 1927 having a first output 1929 and a second output 1931.

The first output 1929 and the second output 1931 of the complex multiplier 1927 are coupled to a filter 1933 having a first output 1935 and a second output 1937.

The image signal canceller shown in Fig. 19 further comprises an adaptive controller 1939 having four inputs. Two of the inputs of the adaptive controller are coupled to the first output 1929 and the second output 1931 of the complex multiplier 1927. The remaining two inputs of the adaptive controller 1939 are coupled to the outputs of the filter 1933. The adaptive controller 1939 further has an output coupled to the input 1927 of the ortho-normalizer 1921.

As mentioned above, the interference is introduced since, conventionally, a down conversion scheme is applied to a real valued signal so that all processed variables are real number variables. The interferences can be suppressed, when the real numbered variables are transformed into a complex domain. In other words, if all variables are complex, then the negative frequency can easily be separated from the positive frequency, so that the interference can be reduced.

In Fig. 19, the received signal (receive signal) at the input terminal 1903 is directly provided to the radio frequency quasi-coherent detector 1901 (RF-QCD). The quasi-coherent detector 1901 is operative to perform a Hilbert transform in order to derive orthogonal I-/Q-components from the receive signal. Therefore, the output signal provided by the quasi-coherent detector 1901 comprises an in-phase and a quadrature component corresponding to a real part and to an imaginary part (real and imaginary component) of a complex number, respectively. These signals are provided to the band pass filter 1909 and then, after filtering, converted into a digital domain so that the outputs of the analogue to digital converter 1915 provide an input signal via the first output 1917 and the second output 1919, the input signal having a real part and an imaginary part being, in case of a perfect orthogonalization, orthogonal with respect to each other. The input signal is provided to the ortho-normalizer 1921, wherein the ortho-normalizer 1921 is operative to perform a re-ortho normalization of the input signal in case when the quasi-coherent detector 1901 has a poor performance.

The ortho-normalizer 1921 provides a corrected input signal via the first output 1923 and the second output 1925, wherein the corrected input signal has a reduced orthogonality error compared to the input signal at the input of the ortho-normalizer 1921. Since the input signal and the corrected input signal preferably are digital signals, the down conversion to the base band may be performed by applying complex multiplications to the corrected input signal. This operation is performed by the complex multiplier 1927 down converting the corrected input signal into the base band. The base band signal is then provided to the filter 1933, which is formed to remove the image interference. Therefore, only the desired signal is provided via the outputs 1935 and 1937.

The image interference can be removed successfully without re-ortho-normalization, when the Hilbert transformation performed by the quasi coherent detector 1901 is error-free, i.e., when the real part of the input signal is orthogonal to the imaginary part of the input signal. However, since the quasi-coherent detector 1901 is preferably operative to orthogonalize intermediate frequency signals, analogue devices have to be used in order to implement the quasi-coherent detector 1901. Due to possible imperfections of the analogue devices, the quasi-coherent detector 1901 introduces an orthogonality error, so that the real part of the input signal and the imaginary part of the input signal are not orthogonal with respect to each other. Moreover, if the quasi-coherent detector 1901 should operate within a broad band width, then, due to the imperfections of the analogue devices, a perfect orthogonality over all frequencies cannot be obtained. For example, if the receiver shown in Fig. 19 is applied to receive signals associated with different transmission schemes having different carrier frequencies, then it is impossible to achieve a perfect orthogonality for all receive signals using analogue components implemented in the quasi coherent detector 1901.

In the following, a mathematical description of the above-indicated problems will be provided.

A received signal r(t) by an antenna may be described as

$$r(t) \ = \ \sum_{l=0}^{L} \vartheta_l(t)\,\mathrm{Re}\big[a_l(t)\exp\big(j\omega_l t\big)\big] \ + \ n(t) \ = \ \sum_{l=0}^{L} \vartheta_l(t)g_l(t)\cos\big(j\omega_l t \ + \ \theta_l(t) \ + \ \varphi_l\big) \ + \ n(t)$$

where

$$a_1(t) = g_1(t)\exp(\theta_1(t) + \varphi_1)$$

wherein t is a time index. $\vartheta_1(t)$, $s_1(t)$, $\eta(t)$, $\omega_1(= 2\pi f_1)$ $\varphi_1 l = 0 ..., L$ and Re[.] denote a fading gain, a transmitted signal, an additive white Gaussian noise (AWGN), an angular frequency of a desired, initial phase of a carrier oscillator in the transmitter and a function of extracting a real part, respectively. In addition, $g_1(t)$ and $\theta_1(t)$ represent an amplitude and phase part of a transmitted symbol, on which an information is mapped. The band pass filter 1909 is assumed to have the following frequency response

$$BPF[\omega] = \begin{cases} 0 & 0 < \omega < \omega_{IF} - \Delta\omega / 2 \\ 1 & \omega_{IF} - \Delta\omega / 2 < \omega < \omega_{IF} + \Delta\omega / 2 \\ 0 & \omega_{IF} + \Delta\omega / 2 < \omega \end{cases}$$

where $\omega_{IF}(= 2\pi f_c)$ and $\Delta\omega$ are angular intermediate frequency and band pass of the intermediate frequency band pass filter 1909, respectively. The signal passing through the quasi-coherent detector 1901 and the band pass filter 1901 may be expressed using the following equation, wherein $\omega_0$ is the carrier frequency of the desired signal.

$$\dot{Y}(t) = \begin{bmatrix} y_I(t) \\ y_Q(t) \end{bmatrix} = \begin{bmatrix} BPF[r(t)\cos((\omega_0 - \omega_{IF})t)] \\ BPF[r(t)\sin((\omega_0 - \omega_{IF})t + \phi(\omega_0))] \end{bmatrix}$$

$$= \frac{\vartheta_0(t)g_0(t)}{2}\begin{bmatrix} \cos(\omega_{IF}t + \theta_0(t) + \varphi_0) \\ \sin(\omega_{IF}t + \theta_0(t) + \varphi_0 - \phi_0(t)) \end{bmatrix} + \begin{bmatrix} \eta_I^{(+)}(t) \\ \eta_Q^{(+)}(t) \end{bmatrix}$$

$$+ \sum_{\omega_n - \omega_1 \in \Delta\omega} \frac{\vartheta_n(t)g_n(t)}{2}\begin{bmatrix} \cos((\omega_n - \omega_0 + \omega_{IF})t + \theta_n(t) + \varphi_n) \\ \sin((\omega_n - \omega_0 + \omega_{IF})t + \theta_n(t) + \varphi_n) \end{bmatrix} + \begin{bmatrix} \eta_I^{(-)}(t) \\ \eta_Q^{(-)}(t) \end{bmatrix},$$

where $n_I^{(+)}$, $n_Q^{(+)}$, $n_I^{(-)}$, $n_Q^{(-)}$, $\phi(\omega_n)$, and BPF [ ] denote a real and image part of the AWGN being down converted from the desired band, a real and a image part of a AWGN being down converted from an image band, an orthogonality error introduced by the quasi coherent detector 1901, a function of extracting a pass band signal of the intermediate band pass frequency, respectively.

In the above equation, only the first term is the desired signal component and the third term is the image interference. If $\phi(\omega_n)$ equals zero, then the base band output does not have any image interference. In order to remove the orthogonality error, $Y(t)$ is provided to the ortho-normalizer 1921 being operative to multiply the input signal by the following (weighting) matrix.

$$W(k) = \begin{pmatrix} w_0(k) & w_1(k) \\ 0 & w_2(k) \end{pmatrix}.$$

Wherein $w_0(k)$, $w_1(k)$ and $w_2(k)$ denote a set of coefficients applied to weighting the input signal.

After the re-ortho-normalization unit 1921, the complex multiplier 1927 is arranged, which is a complex frequency converter. The complex frequency converter 1927 is operative to perform a down conversion of the corrected input signal (corrected input vector) by multiplying the corrected input vector by a matrix defined in the following equation.

$$F^{(0)}(k) \;=\; \begin{pmatrix} \cos(\omega_0 k T_0) & \sin(\omega_0 k T_0) \\ -\sin(\omega_0 k T_0) & \cos(\omega_0 k T_0) \end{pmatrix} \cdot$$

The output $z(k)$ of the low pass filter 1933 is

$$Z(k) \;=\; H \otimes F^{(0)}(k) W(k) Y(k).$$

In the above equation, H and $\oplus$ represent an impulse response of the low pass filter 1933 and a convolution operation, respectively.

Additionally, $Y(k) = Y(k T_0)$, where $t = k T_0$. The aim is to determine the optimum matrix W(k) for removing the interference from Z (k) . Therefore, W(k) has to be estimated for an arbitrary carrier frequency of the desired signal.

However, in case of fading channels, an interference power may be significantly greater than the desired power, for example 20 dozens dB. In other words, the first term in the above equation may have a power, which is greater than a power of the third term.

In order to perform an adaptation scheme for determining the coefficients of W(k), a minimum mean squared error algorithm (MMSE) can be applied. However, the MMSE algorithm converges when a channel to interference ratio (CIR) is less than zero. Moreover, the MMSE algorithms requires a transmission of known training sequences for performing the adaptation process. Therefore, as mentioned above, blind algorithms may be applied, which do not require in a training sequence for performing the adaptation process.

Among other blind algorithms, a constant modulus algorithm (CMA) may be applied to adaptively determine the set of coefficients of the weighting matrix. Furthermore, the constant modulus algorithm can be applied to determining coefficients of an equalizer applied to equalising a distorted signal, wherein a characteristic property of an undisturbed signal is exploited. To be more specific, the constant modulus algorithm is preferably applied to signals having a constant envelope in an undisturbed state. This certain waveform may exploited for determining the coefficients of the equalizer such that the equalised signal comprises the constant envelope (constant modulus).

In accordance with the present invention, the constant modules algorithm can also be applied for removing the orthogonality error or even other errors disturbing the input signal. The optimum-weighting matrix can be obtained by iterating the following recursive algorithm

$$e(k) \;=\; \sigma^P - |Z(k)|^P$$

$$w_{i,j}(k) \;=\; w_{i,j}(k-1) + \mu |e(k)|^{q-2} e(k) |Z(k)|^{P-2} Z^T(k) H \otimes F^{(1)}(k) P_{i,j} Y(k).$$

In the above equation, σ, $p$, and $q$ indicate a reference level and an exponent determining the properties of the CMA algorithm (integer of the CMA algorithm), respectively. The reference level may be for example determined form the constant envelope value of the undisturbed signal. Alternatively, the reference level may be chosen from a set reference levels associated with the constant envelope within a predetermined range.

Since the CMA algorithm converges when the undisturbed signals comprise a constant envelope, it has the disadvantage, that it can be applied only in single carrier systems using a constant envelope modulation scheme, for example QPSK (quadrature phase shift keying). However, single carrier systems suffer from a reduced bandwidth efficiency, so that the desired high data rates of the next generation transmission systems cannot be achieved. For example, next mobile communication systems support data transmission rates in a downlink direction at 100 Mbit/s, whereas the third generation systems, for example UMTS, support the data rate at 384kbit/s. However, date transmission rates of about 50 Mbit/s can be achieved within a wireless local area network (WLAN) when multi-carrier modulation techniques are applied. However, the service area of WLAN is limited and smaller than the service area of cellular mobile communication systems, such as GSM or PDC. Therefore, radio communication systems will have a service area comparable to that of the cellular systems, proving high-speed data rates of about 100 Mbits/s. One of the frequently used multi-carrier modulation techniques is orthogonal frequency division multiplexing (OFDM), since these modulation scheme is robust against intersymbol interferences (ISI) limiting the achievable data rate.

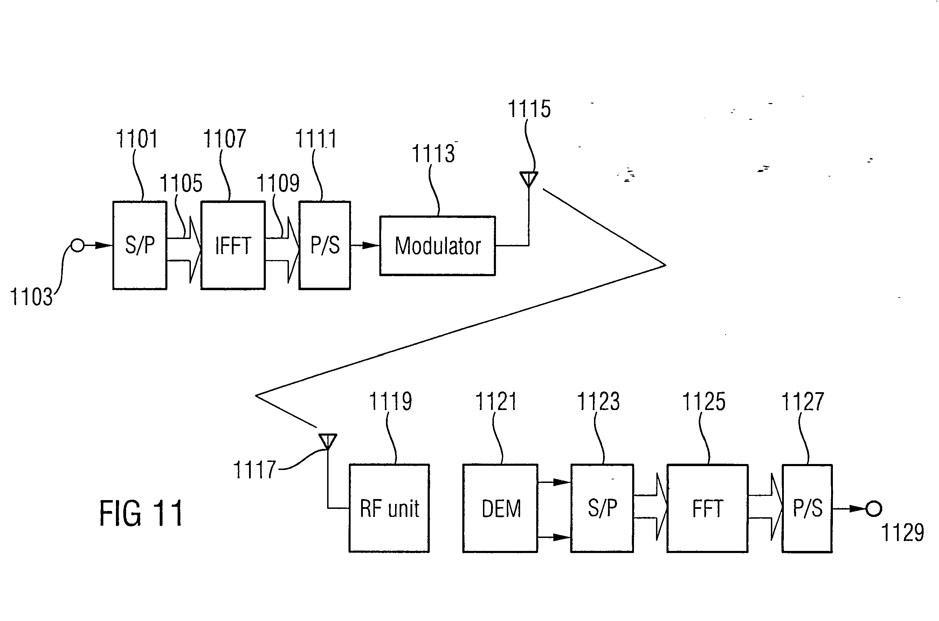

Fig. 11 demonstrates an OFDM transmission scheme. An OFDM transmitter has a serial to parallel converter 1101 having an input 1103 and a plurality of outputs 1105. The plurality of outputs 1105 is coupled to a transformer 1107 being operative to perform an inverse fast Fourier transform (IFFT). The transformer 1107 has a plurality of output 1109 coupled to a parallel to serial converter 1111. The parallel to serial converter 1111 is coupled to a modulator 113, which is coupled to a transmit antenna 1115.

A receiver comprises a receive antenna 1117 having an output coupled to a RF unit 1119. The RF unit 1119 has an output coupled to a demodulator 1121. The demodulator 1121 is coupled to a serial to parallel converter 1123 having a plurality of outputs coupled to a transformer 1125 being operative to perform the fast Fourier transform (FFT). The transformer 1125 has a plurality of outputs coupled to a parallel to serial transformer 1127 having an output 1129.

An information data stream provided via the input 1103 to serial to parallel converter 1101 is multiplexed by same into a plurality of data stream provided via the plurality of output 1105. The streams are provided to the transformer 1107 performing the IFFT operation, wherein the transformer 1107 may be, for example a processor. The transformed signals are provided via the plurality of outputs 1109 to the parallel to serial converter 1111 providing a serial data stream via the output 1111. The modulator 1113 inserts a guard interval into the serial date stream and performs an up-conversion scheme in order to provide a high frequency transmit signal being transmissible from the antenna 1115. The emitted signal at antenna 1115 is transmitted through a communication radio channel, wherein the receive antenna 1117 detects a received high frequency signal. The received high frequency signal is down-converted by both, RF unit 1119 and the demodulator 1121 which further removes the guard interval. The demodulator 1121 provides via the output a signal to the serial to parallel converter, wherein the signal may be a Hilbert-transformed signal comprising an I- and Q-component. The transformer 1125 transforms the signal provided by the serial to parallel converter 1123 into frequency domain, wherein the frequency domain signals are provided, after a parallel to serial conversion, via the output terminal 1129.

However, the constant modulus algorithm can not be applied to the OFDM signals since same does not have the characteristic property required for the constant modulus algorithm, namely a constant envelope. Hence, the image interference canceller described above cannot be applied in OFDM systems in a straightforward way.

However, if the input sequence to be transmitted using the OFDM transmission scheme has a constant envelope, i.e. when the input signal stream belongs to for example a QPSK modulation scheme, then, in frequency domain, the signal envelope is constant, which can be exploited for adaptation of coefficients of weighting matrix using constant modulus algorithm.

Therefore, adaptive signal processing controlling a re-ortho-normalization unit may be carried out in the frequency domain where the signal envelope is constant, even though the re-ortho normalization is carried out in the time domain.

Generally, the present invention provides a concept for applying a constant modulus algorithm to signals being characterised by a variable envelope, by transforming these signals into transformed signals fulfilling the constant envelope property.

It is a further advantage of the present invention, that the image cancellation can blindly be performed at the receiver, so that training sequences are not required in order to perform the adaptation process. This results in an increased bandwidth efficiency of the resulting transmission system.

Further embodiments of the present invention are described in detail with respect to the following figures, in which:

Fig. 1       shows a block diagram of an apparatus for adaptively correcting an error in an input signal in accordance with a first embodiment of the present invention;

Fig, 2       shows a block diagram of a receiver apparatus in accordance with the present invention;

Fig. 3       shows an embodiment of a quasi-coherent detector;

Fig. 4        shows an embodiment of a multi-carrier image canceller in accordance with a further embodiment of the present invention;

Fig. 5        shows a block diagram of a multi-carrier image canceller in accordance with a further embodiment of the present invention;

Fig. 6        shows a receiver apparatus in accordance with a further embodiment of the present invention;

Fig. 7        shows a block diagram of a receiver apparatus in accordance with a further embodiment of the present invention;

Fig. 8        demonstrates a performance of the inventive apparatus for adaptively correcting the error;

Fig. 9        demonstrates a performance of the inventive apparatus for adaptively correcting the error;

Fig. 10       demonstrates a performance of the inventive apparatus for adaptively correcting the error:

Fig. 11       shows a block diagram of the OFDM transmission scheme;

Fig. 12       shows a block diagram of a conventional multi mode receiver;

Fig. 13       shows a block diagram of a conventional multi mode receiver;

Fig. 14       shows a multi mode receiver;

Fig. 15       shows a conventional homodyne receiver;

Fig. 16       shows a conventional heterodyne receiver;

Fig. 17       shows a conventional heterodyne receiver;

Fig. 18       shows a frequency allocation scheme;

Fig. 19       shows an image signal canceller.

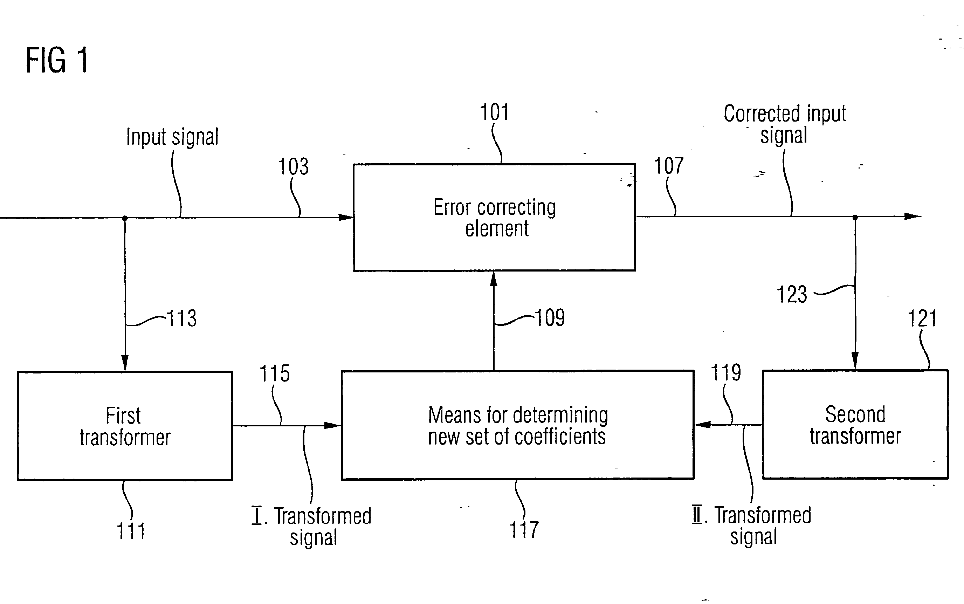

Fig. 1 shows an apparatus for adaptively correcting an error in an input signal on the basis of an adaptation scheme relaying on a characteristic property not comprised by the input signal. The characteristic property may be a characteristic waveform, for example a constant envelope.

The apparatus shown in Fig. 1 comprises an error-correcting element 101 having an input 103 and an output 107. Furthermore, the error-correcting element 101 has a further input 109. The apparatus further comprises a first transformer 111 having an input 113 coupled to the input of the input 103 of the error correcting element 101 and an output 115 coupled to a means 117 for determining new set of coefficients. The means 117 for determining new set of coefficients has an output coupled to the input 109 of the error correcting element 109 and a further input 119. A second transformer 121 is coupled between the output 107 of the error correcting element 101 and the means 117 for determining new set of coefficients. To be more specific, the second transformer 121 has an input 123 coupled to the output 107 of the error correcting element 107 and an output coupled to the input 119 of the means,117 for determining new set of coefficients.

The error-correcting element 101 is operative to provide a corrected input signal by weighting the input signal provided via the input 103 using a set of coefficients. The error-correcting element provides via the output 107 a corrected input signal having a reduced error with respect to the input signal. In order to adaptively weight the input signal, the error-correcting element 101 weights the input signal using a set of coefficients at a first time instant. At a second time instant, the next received input signal is weighted by a new set of coefficients to provide a new corrected input signal. Hence, the coefficients used by the error correcting elements 101 are adaptively determined over time.

In order to determine new set of coefficients, the input signal and the corrected input signal are transformed into transformed signals, such that a corresponding transformed signal comprises the characteristic property required by the means 117 for determining new set coefficients in order to perform the adaptation process. To be more specific, the first transformer 111 transforms the input signal into a transformed input signal (first transformed signal) provided via the output 115 to the means 117 for determining new set of coefficients. Accordingly, the second transformer 121 transforms the corrected input signal into a transformed corrected input signal (second transformed signal) provided via the input 119 to the means 117 for determining new set of coefficients. The first transformer 111 and the second transformer 121 are operative to perform a transform transforming the input signal and the corrected input signal into corresponding transformed signals comprising the characteristic property. As mentioned above, the means 117 for determining new set of coefficients is operative to determine same to be used in a next adaptation step from the set of coefficients used in a current or in a previous adaptation step and from the first and the second transformed signal.

The input signal may for example be formed from a receive signal by deriving an in-phase (I) component from the receive signal as a real part of the input signal and by deriving a quadrature (Q) component from the receive signal as an imaginary part of the input signal. During the derivation of the quadrature components, an orthogonality error may occur, so that the real part of the input signal is not orthogonal to the imaginary part of the input signal. This scenario corresponds to the Hilbert transformation case, wherein the applied Hilbert transformer has a pure performance, as discussed above. In this case, the error correcting element 101 is operative to provide the corrected input signal having a reduced orthogonality error by weighting the input signal using the set of coefficients determined by the means of new set of coefficients.

In particular, the input signal and the corrected input signal may be digital signals obtained from an analogue to digital conversion of an analogue receive signal. In this case, the input signal comprises a set of input points, the set of input points comprising a set of real values corresponding to the real part of the input signal at a set of imaginary values corresponding to the imaginary part of the input signal, wherein the corrected input signal comprises a set of corrected points, the set of corrected points comprising a set of real values corresponding to the real part of the corrected input signal and a set of imaginary values corresponding to the imaginary part of the corrected input signal. Hence; each of the input points may be considered as being a two-dimensional vector having two entries corresponding to a real and an imaginary value of the associated input point.

Due to the orthogonality error an erroneous input point of the set of input points has the orthogonality error, so that the real value of the erroneous input point is not orthogonal to the imaginary value of he erroneous input point. The error-correcting element 101 is operative to weight the erroneous input point by the set of coefficients to provide a corrected point of the corrected signal having a reduced orthogonality error. Summarising, the error-correcting element 101 performs an error correction operation weighting each particular input point by the set of coefficients. This weighting operation can be implemented as a matrix by vector multiplication, wherein the erroneous input point, as a vector, is multiplied by a weighting matrix comprising the set of coefficients arranged within the matrix, wherein the weighting matrix can for example be the matrix

$$W(k) \; = \; \begin{pmatrix} w_0(k) & w_1(k) \\ 0 & w_2(k) \end{pmatrix}.$$

The input signal and the corrected input signal may by time domain signals, wherein the characteristic property may be a certain waveform. For example, the characteristic property is the previously mentioned constant envelope. Alternatively, the certain wave form can be any other wave form characterising the input signal in an error-free case, for example a pulse amplitude modulation.

In order to provide the first transformed signal, the first transformer 111 is operative to transform a version of the input signal into frequency domain. Accordingly, the second transformer 121 is operative to transform a version of the corrected signal into frequency domain for obtaining the second transformed signal. Hence, the operation of the first transformer 111 and the second transformer 121, namely providing frequency domain transformed signals is performed in order to obtain transformed signals comprising the certain wave form, for example the previously mentioned constant envelope.

In order to improve the convergence characteristic of the applied blind adaptation scheme, the first transformer 111 may be operative to oversample the input signal 113 prior to providing the first transformed signal by an oversampling factor M, M being equal to or greater than 2, to provide an oversampled input signal as the version of the input signal. Accordingly, the second transformer may be operative to oversample the corrected signal by the oversampling factor M to provide an oversampled directed signal as the version of the corrected signal.

If the input signal and if the corrected signal are base band signals, then the first transformer directly transforms the input signal or the oversampled input signal into frequency domain. Accordingly, the second transformer 121 transforms the corrected input signal, being a base band signal or an oversampled version thereof, directly into frequency domain. However, the input signal as the corrected signal may be intermediate frequency signals and not base band signals. In this case, the first transformer may comprise a first down-converter for down-converting the intermediate frequency signal in order to provide a down-converted version of the input signal as the version of the input signal to be transformed into frequency domain. Accordingly, the second transformer 121 may comprise a second down-converter being operative for providing a down-converted version of the corrected signal as the version of the corrected signal to be transformed into frequency domain.

In order to provide the first transformed signal as a frequency domain transform signal, the first transformer may comprise a fast Fourier transformer (FFT) or a discrete Fourier transformer (DFT) in order to transform the version of the input signal into frequency domain to obtain the first transformed signal. Accordingly, the second transformer may comprise a fast Fourier transformer or a discrete Fourier transformer to transform the version of the corrected input signal into frequency domain to obtain the second transformed signal.

As mentioned before, the input signal may be formed from a receive signal by deriving an in-phase (I) component from the receive signal as the real part of the input signal and by deriving the quadrature (Q) component from the receive signal as the imaginary part of the input signal. The orthogonality error may occur while the derivation of the I- and Q-component, so that the real part of the input signal is not orthogonal to the imaginary part of the input signal. Hence, the error-correcting element 101 is operative to reduce the orthogonality error using the weighting coefficients provided by the means 117 for determining new set of coefficients. The means 117 for determining new set of coefficients is relaying, for example, on the previously mentioned constant envelope property. For example, the first transformed signal has a constant envelope within a predetermined range, when the orthogonality error does not occur. The predetermined range takes small variations of the envelope into account, for example, when the envelope varies within a range of for example 5% of an average constant envelope value.

However, in case of the orthogonality error, the first transformed signal has a distorted envelope comprising a super position of the constant envelope and an error envelope due to the orthogonality error. The means 117 for determining new set of coefficients to be used in the next adaptation steps is operative to determine the new coefficients exploiting the constant envelope property in the error-free case. For example, the means for determining the set of new coefficients may be operative to perform the previously mentioned constant modulus algorithm to obtain the set of new coefficients to be used in the next adaptation step. The adaptation is performed so that the error envelope comprised by the second transformed signal is reduced, when the error correcting element 101 weights the input signal by the new set of coefficients provided by the means 117 for determining the new set of coefficients.

The constant modulus approach performed by the inventive means 117 for determining new set of coefficients is discussed in detail later.

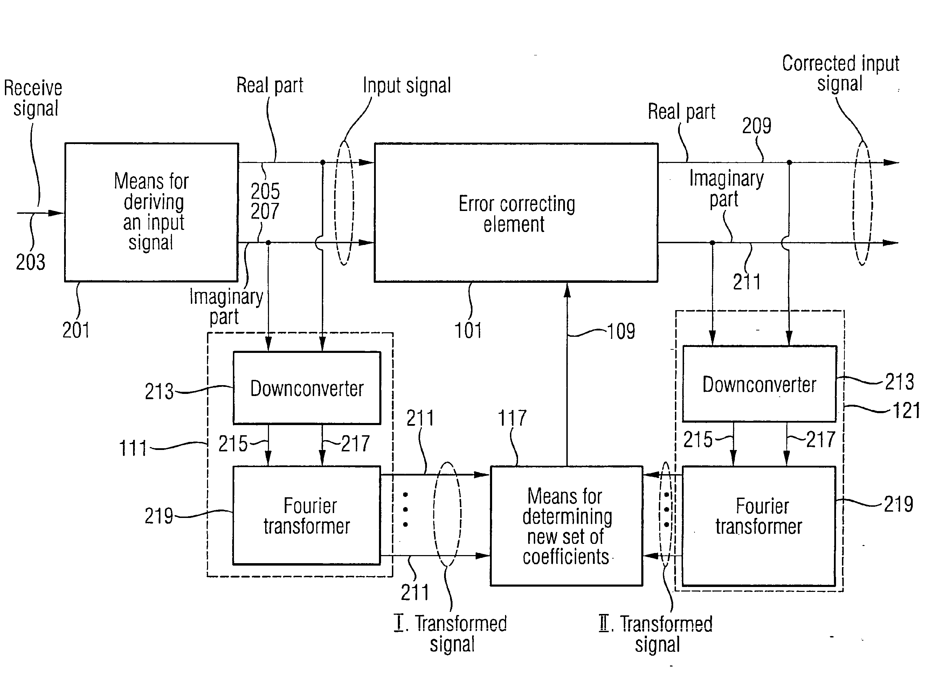

Fig. 2 shows a receiver apparatus in accordance with the present invention.

The apparatus shown in Fig. 2 comprises a means 201 for deriving the I- and Q-components. The means 201 for deriving having an input 203, a first output 205 and a second output 207. The outputs of the means 201 for deriving are coupled to the error-correcting element 101 having a first output 209 and a second output 211.

The apparatus shown in Fig. 2 further comprises the first transformer 111 having a down-converter 213 having a first output 215 and a second output 217, both outputs being coupled to a Fourier transformer 219. The Fourier transformer 219 has a plurality of outputs 211 coupled to the means 117 for determining new set of coefficients.

Moreover, the apparatus comprises the second transformer 121 comprising a down-converter to 213 and a Fourier transformer 219, wherein the structure of the second transformer 121 corresponds to the structure of the first transformer 111. The outputs of the Fourier transformer 219 of the second transformer 121 are coupled to the means 117 for determining new set of coefficients, wherein the output 109 of the means 117 for determining new set of coefficients is coupled to the error-correcting element 101.

The receiver apparatus shown in Fig. 2 employs the inventive apparatus for adaptively correcting the orthogonality error in accordance with the previous descriptions. In particular, the error correcting element 101, the first transformer 111 and the second transformer 121 and the means 117 for determining new set of coefficients are operative to perform the operations indicated above.

Via the input 203, a receive signal is provided to the means 201 for deriving the quadrature components. The receive signal may be provided by a means for providing a receive signal, which is not depicted in Fig. 2. The means for providing the receive signal may for example comprise a receive antenna and a RF unit.

The receive signal may be an intermediate frequency analogue signal. In this case, the means for deriving the quadrature components is operative to derive the quadrature components and to provide an analogue to digital converted version of the quadrature components as the input signal. Hence, the means 201 for deriving the quadrature components may further comprise an analogue to digital converter being operative to convert the derived I- and Q-component into digital domain.

The means 201 for deriving the input signal is operative to derive the input signal having a real part and an imaginary part from the receive signal, wherein the means 201 for deriving this operative to derive an in-phase (I) component from the receive signal as the real part of the input signal, and to derive a quadrature (Q) component as the imaginary part of the input signal. As mentioned above, the quadrature component of the input signal may be converted into digital domain, when the receive signal is an analogue signal. During the derivation process the means 201 for deriving the input signal introduces an orthogonality error, so that the real part of the input signal and the imaginary part of the input signal are not orthogonal to each other. In order to reduce the orthogonality error, the apparatus for adaptively correcting the orthogonality error in accordance with the previous descriptions may be applied.

Since the input signal and the corrected input signal may be intermediate frequency signals, the first transformer 111 comprises the down-converter 213 (first down-converter), the second transformer 121 comprises the down-converter 213 (second down-converter) for providing down-converted base band signals via the corresponding first or second output 215 and 217. The Fourier transformers 219 are operative to transform the base band signals to obtain the first transformed signal and the second transformed signal.

The means 117 is operative to determine the new set of coefficients starting from the first transformed signal, the second transformed signal, and the currently used set of coefficients. Since the error correcting element 101 may be operative to weight the input signal being an intermediate frequency signal, the set of coefficients may be transformed into the intermediate frequency set of coefficients by an upconverter, which can be comprised by the means 117 for determining the new set of coefficients or, alternatively, by the error correcting element 101. Alternatively, the new set of coefficients may be directly provided such that the input signal may directly be weighted by the new set of coefficients. The input signal, which is a time domain signal is weighted by the new set of coefficients determines on the basis of frequency domain signals (first transformed signal and second transformed signal). And in other words, the adaptation process applied to determining a new set of coefficients is performed in frequency domain, wherein the weighting operation is performed in the time domain.

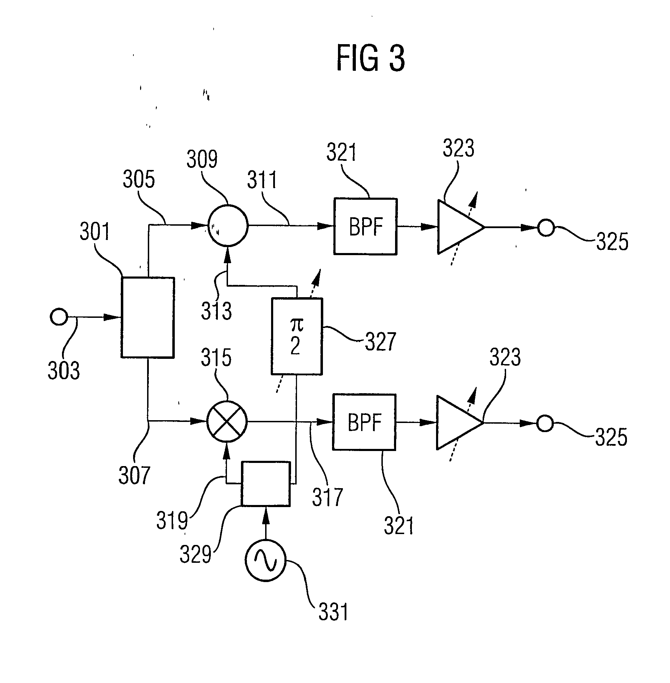

Fig. 3 shows an embodiment of a means for deriving an input signal, which is formed as a radio frequency quasi-coherent detector.

The quasi-coherent detector shown in Fig. 3 comprises hybrid 301 having an input 303, a first output 305, and a second output 307. The first out 305 is coupled to a multiplier 309 herein an output 311 and a further input 313.

The second output 307 of the hybrid is coupled to a multiplier 315 having an output 317 and a further input 319. The outputs 311 and 317 are coupled to a band pass filter 321, respectively, wherein each of the band pass filter 321 has an output coupled to a variable gain amplifier 323, each of the variable gain amplifiers 323 having an output 325.

The quasi-coherent detector shown in Fig. 3 further comprises a variable phase shifter 327 having a first output coupled to the first multiplier 309 and a second output coupled via a further hybrid 329 to the further input 319 of the second multiplier 315. The further hybrid 329 has an input, to which an oscillator 331 is coupled.

The receive signal provided via the input terminal 303 is fed to the hybrid 301. The outputs of the hybrid 301 are provided to the preferably real value multipliers 309 and 315. Additionally, a sinusoidal wave generated by the local oscillator 331 is provided to the further hybrid. The output of the further hybrid is provided to the multiplier 313 via the variable phase shifter 327 and to the multiplier 315. Obviously, the variable phase shifter 327 is operative to provide a phase shift of 90 ˚ between the signal provided to the further inputs of the respective multiplier 315 and 309. As depicted in Fig. 3, the gains of upper and lower line are adjustable, since variable gain amplifier 323 are used. Moreover, the orthogonality between the two lines is variable due to the applied variable phase shifter 327. However, especially if the receive signal is a analogue signal, an orthogonality error may occur resulting in a loss of may occur resulting in a loss of orthogonality between the signals provided via the upper and lower line.

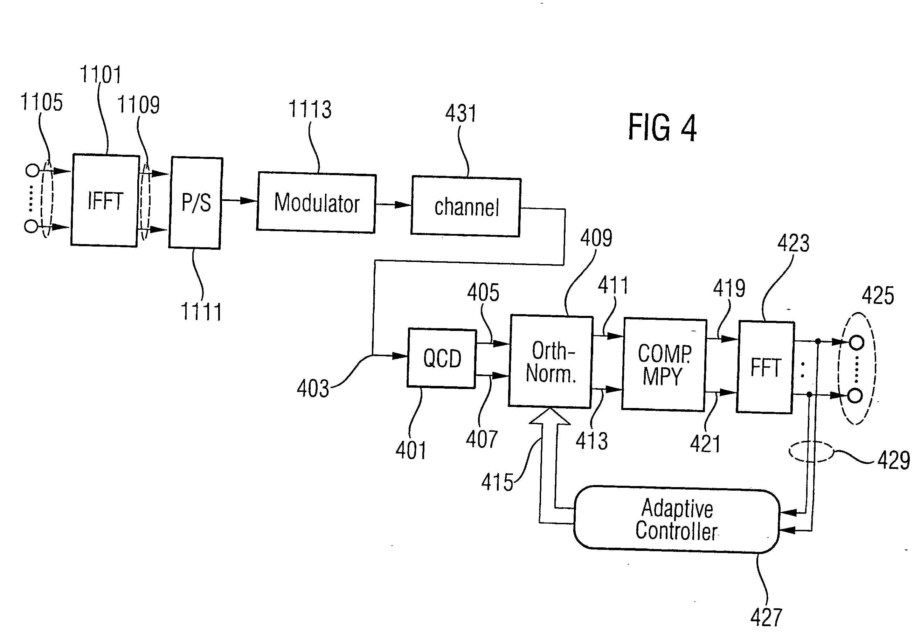

Fig. 4 shows a receiver apparatus in accordance with a further embodiment of the present invention using the inventive multi-carrier image canceller.

The apparatus shown in Fig. 4 comprises a transmitter and a receiver, wherein the transmitter has a structure identical to the structure of the transmitter shown in Fig. 11. However, the receiver is different.

To be more specific, the apparatus in Fig. 4 comprises a quasi-coherent detector 401 having an input 403, a first output 405, and a second output 407. The first output 405 and the second output 407 are coupled to an ortho-normalizer 409 having a first output 411 and a second output 413. The ortho-normalizer 409 has a further input 415.

The first output 411 and the second output 413 of the ortho-normalizer 409 are coupled to a complex multiplier 417 having a first output 419 and a second output 421, both outputs being coupled to a transformer 423 being operative to perform a FFT transform. The transformer 423 has a plurality of outputs 425.

Additionally the apparatus shown in Fig. 4 comprises an adaptive controller 427 having a plurality of inputs 429, each of the inputs coupled to a corresponding output of the plurality of output 427 of the transformer 423. Furthermore, the adaptive controller 427 has an output coupled to the further input 415 coupled to the further input of the ortho-normalizer 409. Additionally, the adaptive controller 427 receives the signals provided by the quasi-coherent detector via the outputs 405 and 407. This feature is not explicitly depicted in Fig. 4.

An information sequence provided via the outputs 1105 of the IFFT 1101, which may be a processor, is transformed into time domain representations being parallel to serial converted. The modulator 1113 provides a radio frequency signal being transmitted through a communication channel 431. A means for providing a receive signal, which is not depicted in Fig. 4, detects the receive radio frequency signal and provides the receive signal to the quasi-coherent detector 401 transforming the real valued receive signal into the complex value input signal. The ortho-normalizer 409 performs a re-ortho-normalization as described above, and provides the corrected input signals to the complex multiplier 417 being operative to down-convert the corrected signal into the base band. The down-converted input signal is provided to the transformer 423, which corresponds to the second transformer in the above descriptions. The second transformed signal provided by the transformer 423 is fed to the adaptive controller 427, which corresponds to the inventive means for determining new set of coefficients. The adaptive controller 427 determines the optimum coefficients to be used in a next adaptation step by the ortho-normalizer 409, the ortho-normalizer 409 corresponding to the error-correcting element.

It should be noted here, that the quasi-coherent detector 401, the ortho-normalizer 409, and the complex multiplier 417 correspond to the quasi-coherent detector 1901, to the ortho-normalizer 1921 and to the complex multiplier 1927 shown in Fig. 19. Unlike the quasi-coherent detector 1901 of Fig. 19, the quasi-coherent detector 401 may comprise a band pass filter and an analogue to digital converter, so that the input signal provided to the ortho-normalizer 409 is a digital signal.

As depicted in Fig. 4, the optimum coefficients to be used by the ortho-normalizer 409 (re-ortho normalization unit) are calculated by using frequency domain signals even though the ortho-normalizer 409 is operative to process time domain signal. In accordance with the present invention, the adaptive controller 427 is capable of estimating the optimum coefficients, even though the input signals and the output signals are in different domain, namely in a time domain and in the frequency domain. In the following, the inventive concept will be explained in detail.

Let an $i^{th}$ information symbol of the l-th user $i^{th}$ be denoted as $a_{1,i}(k)$, where k represents a time index.

The output of the IFFT processor of the 1-th user, $d_1(k)$ can be expressed as follows:

$$d_1(kN + n) = \sum_{i=0}^{N-1} a_{1,i}(k) \exp\left(j2\pi \frac{in}{N}\right)$$

In the above equation, N and j indicate a number of inputs equal to the dimension of the IFFT and the imaginary unit. The output of the quadrature modulator is expressed as

$$s_1(kN + n) = \text{Re}\left[\sum_{i=0}^{N-1} a_{1,i}(k) \exp\left(j2\pi \frac{in}{N} + j\omega_1\left(k + \frac{n}{N}\right)\right)\right],$$

where Re[.] and $\omega_1$ denote function of extracting a real part and an angular carrier frequency associated with a l-th user, respectively. In the following, the communication channel is assumed to be an AWGN channel. Therefore, the receive signal (the input) at the quasi-coherent detector 401 is

$$r(kN + n) = \sum_{i=0}^{L} \vartheta_1(kN + n) \text{Re}\left[\sum_{i=0}^{N-1} a_{1,i}(k) \exp\left(j2\pi \frac{in}{N} + j\omega_1\left(k + \frac{n}{N}\right)\right)\right] + n(k)$$

where $\vartheta_1(k)$ represents a channel gain associated with an $i^{th}$ user signal. This signal is provided to the quasi-coherent detector 401 (QCD), being operative to perform a Hilbert transformation. Therefore, the output signals is

$$x(kN + n) = BPF\left[ r(kN + n) \exp\left( j(\omega_0 - \omega_{IF})\left( k + \frac{n}{N} \right) \right) \right]$$

$$= \sum_{i=0}^{L} \vartheta(kN + n)_l \sum_{i=0}^{N-1} a_{l,i}(k) \left\{ \cos\left( j2\pi \frac{in}{N} + j(\omega_{IF} + \Delta\omega_l)\left( k + \frac{n}{N} \right) \right) \right.$$

$$\left. + j \sin\left( j2\pi \frac{in}{N} + j(\omega_{IF} + \Delta\omega_l)\left( k + \frac{n}{N} \right) - j\Delta\varphi \right) \right\} + n_{IF}(k)$$

In the above equation, $\Delta\omega = \omega_1 - \omega_0$, $n_{If}(k) = BPF[n_{IF}(k) \exp(j(\omega_1 - \omega_0)k)]$ and $\Delta\varphi$ denote a phase error in the QCD 401, where $BPF[\cdot]$ indicates a function of extracting a band pass signal. The band pass function is defined as

$$BPF[a(\omega)] = \begin{cases} 0 & \omega_{upper} \leq \omega \\ a(\omega) & \omega_{lower} < \omega < \omega_{upper} \\ 0 & \omega \leq \omega_{lower} \end{cases}.$$

For the sake of simplicity, $\omega_{upper}$ and $\omega_{lower}$ are assumed to be chosen such that L = 1. The lth user signal is the interference signal, while the 0th user signal is the desired signal. Additionally, $\Delta\omega_0 = -\Delta\omega_1$ denotes a worst-case scenario, where all interference signals overlapp with the desired signal in the intermediate frequency band. Therefore, the worse case scenario significantly limits the performance of the system. Therefore, in the following is assumed that $\Delta\omega_0 = -\Delta\omega_1$.

Let Im[ ] be a function of extracting imaginary part of the input signal, so $y(kN + n)$ is applied to the complex multiplier 417 via the re-ortho-normalization unit 401. The output signal provided by the complex multiplier is

$$Y(kN + n) = F(kN + n)W(kN + n)X(kN + n)$$

where $X(k) = [Re[x(k)]Im[x(k)]]^T$. $W(k)$ is the weighting matrix previously defined. $F(k)$ denotes a down-conversion matrix

$$F(k) = \begin{pmatrix} \cos(\Delta\omega_0 k) & \sin(\Delta\omega_0 k) \\ -\sin(\Delta\omega_0 k) & \cos(\Delta\omega_0 k) \end{pmatrix}.$$

In order to distinguish the desired signal from the interference signal, oversampling by a factor of M is applied to the FFT. Hence, the output signal provided by the FFT 423 can be expressed as

$$z_i(k) = \sum_{n=0}^{MN-1} F\left( kN + \frac{n}{M} \right) W\left( kN + \frac{n}{M} \right) X\left( kN + \frac{n}{M} \right) \exp\left( -j2\pi \frac{in}{MN} \right).$$

Therefore, the above equation describes an output signal of the FFT 423, wherein the down-conversion operation is taken into account during the fast Fourier transform.

Since a FFT operation is performed, a receive filter can be avoided. Hence, the desired signal is down-converted to the base band, wherein the output $z_i(k)$ is the desired signal, wherein i is between 0 and N-1. Contrary thereto, the interference component will appear around $M/T - \Delta\omega_0 /(2\pi)$.

It has been found, that $z_i(k)$ may also be expressed in time domain by

$$z_i(k) = \frac{1}{4}\left[\overline{\vartheta_0}(kN)\{w_0(k) + (jw_1(k) + w_2(k))\exp(-j\Delta\varphi)\}a_{0,i}(k) \right.$$
$$\left. + \overline{\vartheta_1}(kN)\{w_0(k) - (jw_1(k) + w_2(k))\exp(j\Delta\varphi)\}a_{1,N-i}(k)\right] \quad i = 0,\ldots,N-1$$

where $\overline{\vartheta_0}(kN) = E\left[\sum_{i=0}^{N-1}\vartheta_0(kN+i)\right]$. In the above equation, $E(a)$ denotes a sample average of a. Obviously,

$z_i(k)$ is composed of desired $a_{0,i}(k)$ and an interference signal $a_{i,N-i}(k)$. Therefore, the output signal provided by the FFT 423 suffer from interference. When $\overline{\vartheta_1}(kN)$ is greater than $\overline{\vartheta_0}(kN)$, then it is almost impossible to communicate with a desired user transmitting $a_{0,i}(k)$. Regarding the power of $z_i(k)$, the following relationship has been found by exploiting the fact, that $a_{0,i}(k)$ and $a_{1,i}(k)$ are not correlated.

$$|z_i(k)|^2 = \frac{1}{4^2}\left[\left|\overline{\vartheta_0}(kN)\{w_0(k) + (jw_1(k) + w_2(k))\exp(-j\Delta\varphi)\}a_{0,i}(k)\right|^2 \right.$$
$$\left. + \left|\overline{\vartheta_1}(kN)\{w_0(k) - (jw_1(k) + w_2(k))\exp(j\Delta\varphi)\}a_{1,N-i}(k)\right|^2\right]$$
$$\geq \frac{1}{4}\left(w_0^2(k) + |jw_1(k) + w_2(k)|^2\right)\left|\overline{\vartheta_0}(kN)a_{0,i}(k)\right|^2$$

In order to derive the above equation, a Schwartz inequality was used. Therefore, if a power of the receive signal is minimised subject to keeping a norm of $W(k)$ within an appropriate value, the interference signal $a_{1,i}(k)$ can be removed from $z_i(k)$. When $a_{1,i}(k)$ is removed, then $W(k)$ must converge to following solution providing a set of coefficients of the weighting matrix $W(k)$

$$w_0(k) = \frac{g}{2\cos(\Delta\varphi)}, \qquad w_1(k) = \frac{g\sin(\Delta\varphi)}{2\cos(\Delta\varphi)}, \qquad w_2(k) = \frac{g}{2}$$

$$g = \frac{\sigma}{\overline{\vartheta_0}(kN)\langle|a_{0,i}(k)|\rangle}$$

where $\sigma$ and $<a>$ indicate a desired level of the output signal $z_i(k)$ and a sample average of a.

As described above, the orthogonality error introduces the interference appearing in the desired signal. Generally speaking, if an imaginary part and a real part of a complex number are orthogonal to each other, then the complex number may be expressed on a circle in complex co-ordinates. Therefore, if the weighting matrix W(k) provides a corrected signal having a real part and an imaginary part, the corrected signal being on unit circle in the complex co-ordinates, then the above-indicated solution for the set of coefficients is correct. Hence, a matrix G is

$$G = \begin{pmatrix} 1 & 0 \\ -\sin(\Delta\varphi) & \cos(\Delta\varphi) \end{pmatrix}$$

A product of $W(k)$ and G has a value being on the unit circle of the complex co-ordinate. In other words, if an adaptation algorithm minimizing the power of the receive signal while keeping the norm of $W(t)$ constant can be provided, then the algorithm provides $W(k)$ converging to the optimum solution indicated above.

In radio communication channels, a signal corresponding to the image band can result from an interference caused by different signals belonging to different communication systems being characterised by different transmit power. Therefore, the transmission power associated with the interference could be greater than a transmission power associated with the desired signal. Additionally, the receive power changes, as a distance between a receiver and transmitter changes. Therefore, the power of the desired signal can be lower than the power of the interference signal for example by a factor of - 60 dB. As mentioned above, MMSE based algorithm requiring training sequences in order to convert cannot be applied in the above referenced scenario to an adaptation of the coefficients of the weighting matrix since the MMSE algorithm will diverge when a signal to interference ratio (SIR) associated with a training sequence is less than 0.

As mentioned above, blind algorithms do not require training sequence for performing an adaptation process. Therefore, many kinds of blind algorithms can be performed by the adaptive control unit 427 in order to find the coefficients of the weighting matrix W(k) converging towards the above referenced optimum solution.

Among others, the previously mentioned CMA algorithm can be applied to determining the set of coefficients of the weighting matrix.

An error is defined by the following equation.

$$e_i(k) = \sigma^P - |z_i(k)|^P$$

Where p is an integer Accordingly, a cost function is defined by

$$J(k) = \sum_{i=0}^{N-1} \left\langle |e_i(k)|^q \right\rangle = \sum_{i=0}^{N-1} \left\langle \left| \sigma^P - |z_i(k)|^P \right|^q \right\rangle$$

where q is an integer.

In particular, it has been found that a coefficient of the set of coefficients of the weighting matrix may be determined from the following equation.

$$w_i(k) = w_i(k-1) + \mu \sum_{i=0}^{N-1} |e_i(k)|^{q-2} e_i(k) |z_i(k)|^{P-2} \sum_{n=0}^{NM-1} \exp\left(-j2\pi \frac{ni}{NM}\right) F\left(\frac{n}{M}\right) P_i X\left(k + \frac{n}{M} - 1\right)$$

where $\mu$ is a step size parameter. $P_i$ defines a selecting matrix applied to differentiation defined by

$$p_1 = \begin{pmatrix} 1 & 0 \\ 0 & 0 \end{pmatrix}, \quad p_2 = \begin{pmatrix} 0 & 1 \\ 0 & 0 \end{pmatrix}, \quad p_3 = \begin{pmatrix} 0 & 0 \\ 0 & 1 \end{pmatrix}.$$

Accordingly, $X(n) = [\mathrm{Re}[x(n)] \ \mathrm{Im}[x(n)]]^T$.

However, the above algorithm may be unstable, when severe interference occurs. In order to deal with this problem, the step size parameter can be normalised by the power of the received signals including the interference. It has been further found, that the update equation may be rewritten into the following equation, when the above problems are taken into account.

$$w_i(k) = w_i(k-1) + \mu(k) \sum_{i=0}^{N-1} |e_i(k)|^{q-2} e_i(k) |z_i(k)|^{p-2} \sum_{n=0}^{NM-1} \exp\left(-j2\pi\frac{ni}{NM}\right) F\left(\frac{n}{M}\right) P_i X\left(k+\frac{n}{M}-1\right)$$

$$\mu(k) = \frac{\mu}{\sum_{i=0}^{NM-1} \left\langle |z_i(k)|^{pq} \right\rangle} = \frac{\mu}{\sum_{i=0}^{NM-1} \sum_{l=0}^{L} |z_i(k-1)|^{pq}}.$$

L denotes a window length. If the communication channel is time varying, then a forgetting factor $\beta$ can be introduced, so that the following step factor is obtained.

$$\mu(k) = \frac{\mu}{\sum_{i=0}^{NM-1} \sum_{l=0}^{k} \beta^l |z_i(k-1)|^{pq}}.$$

However, the above (fixed step) equations are not completely transformed into frequency domain, since, for example, the step factor is common for all carriers provided by the fast Fourier transformer.

It has been further found that an adaptation algorithm can fully be implemented in frequency domain. Let $\Delta\omega_0$ be defined as $4\pi/T$. Hence, a re-ortho-normalizing update algorithm (adaptive step) is defined by

$$w_i(k) = w_i(k-1) + \sum_{i=0}^{N-1} \mu_i(k) |e_i(k)|^{q-2} e_i(k) |z_i(k)|^{p-2} \sum_{n=0}^{NM-1} \exp\left(-j2\pi\frac{ni}{NM}\right) F\left(\frac{n}{M}\right) P_i X\left(k+\frac{n}{M}-1\right)$$

where

$$\mu_i(k) = \frac{\mu}{\sum_{l=0}^{k} \beta^l |z_i(k-1)|^{pq} + \sum_{l=0}^{k} \beta^l |z_{(M-4)N-i}(k-1)|^{pq}} \ .$$

M denotes, as mentioned before, the oversampling factor.

Although a CMA algorithm is not derived by minimizing a received signal while keeping the norm of $W(k)$, the CMA algorithm allows a direct minimisation of the interference while keeping a desired signal power constant. Since keeping the desired signal power constant is equivalent to keeping the norm of $W(k)$ constant, the CMA approach meets the requirements described above.

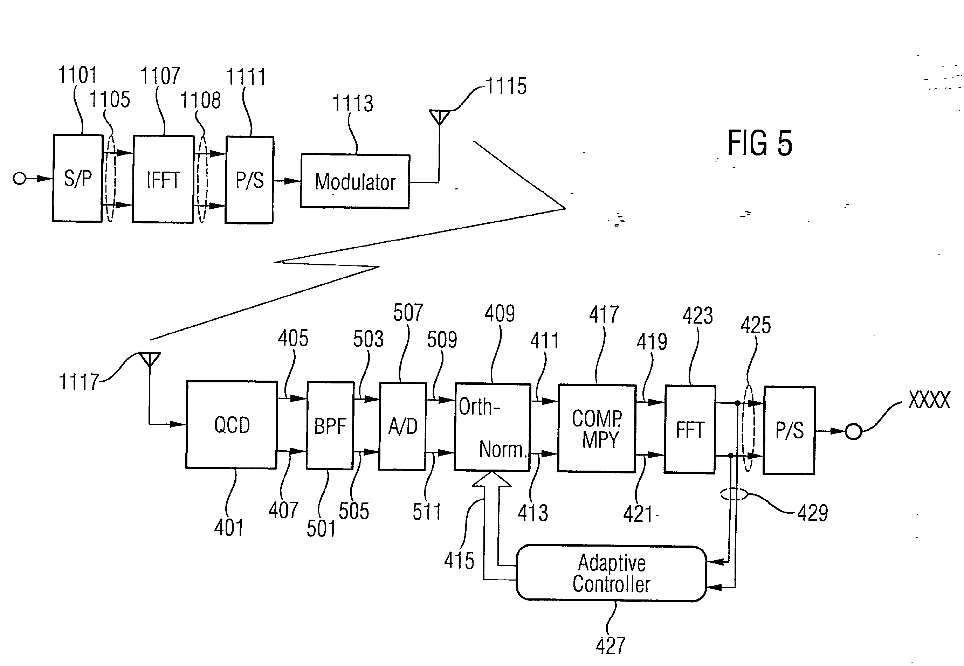

Fig. 5 shows an embodiment of a receiver apparatus in accordance with a further embodiment of the present invention.

The transmission system depicted in Fig. 5 comprises a transmitter having an identical structure to the transmitter shown in Fig. 11.

The receiver apparatus comprised by the transmission system shown in Fig. 5 has a structure, which is similar to the structure of the receiver apparatus described in connection with the embodiment of Fig. 4. Additionally, the receiver structure comprises a band pass filter 501 having two inputs coupled to the first output 401 and to the second output 407 of the quasi-coherent detector 401. The band pass filter 501 has a first output 503 and a second output 505, the outputs being coupled to an analogue to digital converter 507. The analogue to digital converter 507 has a first output 509 and a second output 511 coupled to the ortho-normalizer 409.

For example, the wireless transmission system shown in Fig. 5 illustrates a scenario, where only one user (one system) occupies a radio channel.

In Fig. 5, the QCD 401, the band pass filter 501 and the analogue to digital converter 507 are components of the inventive means for deriving the input signal provided via the outputs of the analogue to digital converter 507. The remaining components operate as described above.

Since the band pass filter 501 is operative to pass signals only in the desired and in the image band, the inventive approach incorporated by the apparatus shown in Fig. 5 allows a demodulation of received signals from for example two radio networks even in the case of arbitrary channels.

In Fig. 5, the signals are processed by the means of digital signal processing except for the microwave parts. In particular, also the adaptive control is performed in the digital signal-processing domain. However, digital signal processing may consume high power being proportional to the hardware complexity and processing rate. The oversampling and the fast Fourier transform operations are performed at the rate of M/NT, where T denotes a bit rate. Therefore, the re-ortho normalization unit 409 and the complex multiplier 417 have to be operated at the rate of $1/T$, which is associated with a considerable power consumption.

Since the interference is caused by the imperfectness of the quasi-coherent detector 401, a re-ortho-normalization will not be required in the receiver, when the quasi-coherent detector 401 may adaptively be controlled in order to guarantee the orthogonality even in the radio frequency band. However, a accuracy of digital signal processing algorithm is limited by a resolution of a analogue to digital converter, especially in a case of a co-existence of analogue signal processing device and digital signal processing devices. Since analogue to digital converter being characterized by high-speed operation and high resolution are expensive, parts of the inventive signal processing may be implemented using analogue devices.

In order to take this into account, the inventive adaptation scheme may also be applied to adaptively controlling of the analogue devices.

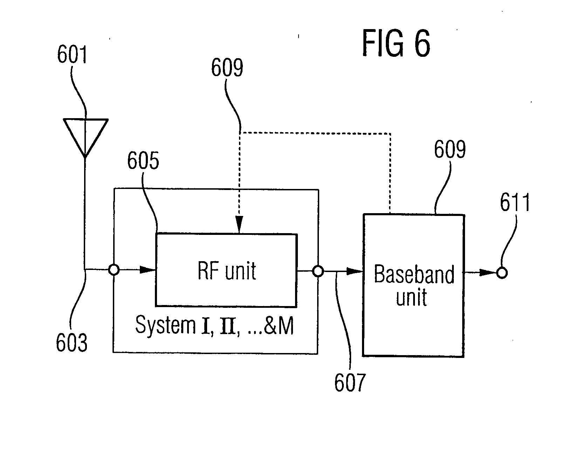

Fig. 6 shows a further embodiment of an inventive multi mode receiver, wherein a radio frequency unit is controlled.

The receiver apparatus shown in Fig. 6 comprises a receive antenna 601 having an output coupled to an input 603 of a radio frequency unit 605. The radio frequency unit 605 has an output 607 and a further input 609. The output 607 of the radio frequency unit 605 is coupled to a base band unit 609 having an output 611 and a further output coupled to the further input 609 of the radio frequency unit 605.

The receiver apparatus shown in Fig. 6 comprises a radio frequency quasi-coherent detector being adaptively controlled by the base band unit 609. The signals received at the antenna 601 are provided to the adaptive radio frequency unit 609 via the input terminal 603. The real and imaginary part of the output signal are orthogonalised and the output signal of the radio frequency unit 609 is provided to the base band unit 609 as the input signal in accordance with the present invention. In the base band unit 609, control signals are generated in order to control the adaptive radio frequency quasi-coherent detector implemented in the radio frequency unit 605 such that complex signal being orthogonal to each other are generated at its output.

For example, the controllable quasi-coherent detector has a structure a shown in Fig. 3.

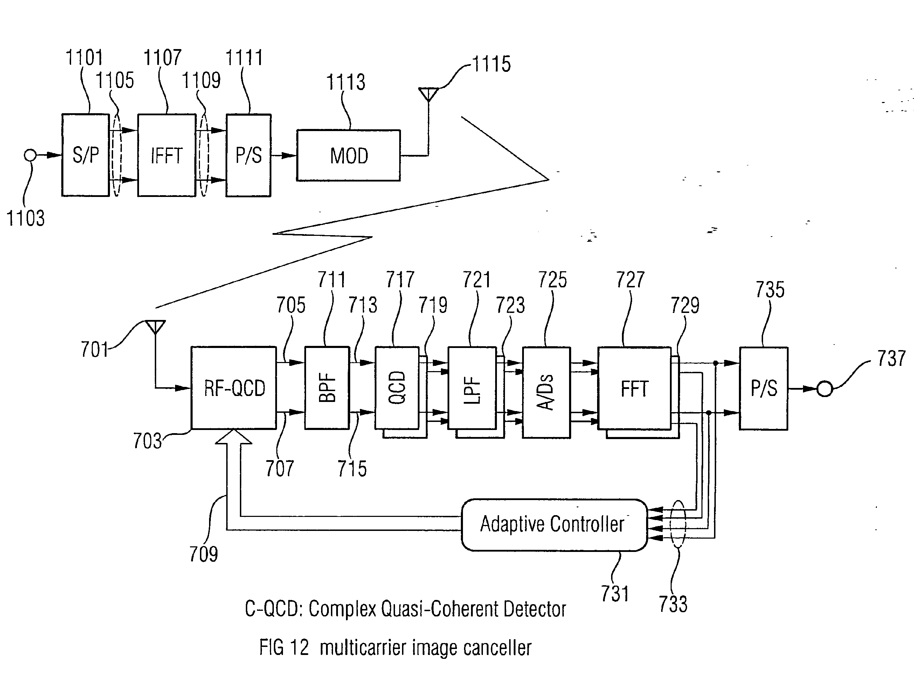

Fig. 7 shows a receiver apparatus comprising a radio frequency quasi-coherent detector in accordance with a further embodiment of the present invention.

The receiver apparatus shown in Fig. 7 is embedded into a transmission system having a transmitter as for example described in connection with the embodiment shown in Fig. 11.

The receive apparatus comprises a receive antenna 701 having an output coupled to a radio frequency quasi-coherent detector 703 (RF-QCD). The RF-QCD 703 has a first output 705 and a second output 707. Furthermore, the RF-QCD 703 has a further input 709. The outputs 705 and 707 of the RF-QCD 703 are coupled to a band pass filter 711 having a first output 713 and a second output 715. The outputs of band pass filter 713 and 715 are coupled to a first quasi-coherent detector 717 and to a second quasi-coherent detector 719. The outputs of the quasi-coherent detector 717 are coupled to a low pass filter 721, wherein the outputs of the second quasi-coherent detector 719 are coupled to a low pass filter 723. The outputs of the low pass filter 721 and the outputs of the low pass filter 723 are coupled to analogue to digital converter 725, wherein a first analogue digital converter is associated with the signal path determined by the low pass filter 721, and a second analogue to digital converter 725 is associated with a second signal path determined by the second low pass filter 723. The first analogue to digital converter 725 has two outputs connected to a first fast Fourier transformer 727 (FFT), and the two outputs of the second analogue to digital converter are coupled to a second fast Fourier transformer 729 (FFT) .

The receiver apparatus shown in Fig. 7 further comprises an adaptive control unit 731 corresponding to the inventive means for determining a new set of coefficients. The adaptive control unit 731 has a plurality of inputs 733. A first number of the inputs is coupled to a number of outputs of the first FFT 729, and a second number of the input 733 is coupled to a number of outputs of the FFT 727. The adaptive control unit 731 further comprises an output coupled to the further input 709 of the RF-QCD 703.

Additionally, the receiver apparatus shown in Fig. 7 comprises a parallel to serial converter 735 having a number of inputs coupled to the number of outputs of the FFT 727. Furthermore, the parallel to serial converter 735 has an output 737.

The output signal provided by the band pass filter 711 is provided to the first quasi-coherent detector 717 and to the second quasi-coherent detector 719 (C-QCD). The QCD 717 and the QCD 719 are operative to perform the following calculation:

$$Y_0\big(kN + n\big) = F\big(kN + n\big)X\big(kN + n\big)$$

$$Y_1\big(kN + n\big) = F\big(- kN - n\big)X\big(kN + n\big).$$

The output signals provided by the QCD 717 and 719 are filtered by the corresponding low pass filters 721 and 723. After analogue to digital conversion, the fast Fourier transformer operation is performed. The output signals of the FFT 727 and 729 are described as follows:

$$z_{0,i}\big(k\big) = \sum_{n=0}^{N-1} BPF\big[Y_0\big(kN + n\big)\big] \exp\bigg(- j2\pi \frac{in}{N}\bigg)$$

$$z_{1,i}\big(k\big) = \sum_{n=0}^{N-1} BPF\big[Y_1\big(kN + n\big)\big] \exp\bigg(- j2\pi \frac{in}{N}\bigg).$$

In Fig. 7, a re-ortho-normalization matrix update can be obtained by means of a perturbation method since a conventional MMSE estimation scheme is not valid for radio frequency signal processing.

Referring again to Fig. 3, an example of the adaptive radio frequency quasi-coherent detector is shown. The radio frequency quasi coherent detector has a variable functionality due to the variable phase shift element 327 adjusting the phase shift such that the quadrature signals provided via the output 325 are, ideally, orthogonal to each other. This variable functionality of the adaptive radio frequency quasi-coherent detector shown in Fig. 3 is comparable to the variable functionality of the re-ortho normalization units being described above. Therefore, a transfer function of an adaptive quasi-coherent detector can be expressed as:

$$
\begin{bmatrix} \mathrm{Re}[x(k)] \\ \mathrm{Im}[x(k)] \end{bmatrix} = \begin{bmatrix} BPF_{RF}[g_{RF,I} \cos(\omega_{RF}t)r(t)] \\ BPF_{RF}[g_{RF,Q} \sin(\omega_{RF}t + \Delta\phi)r(t)] \end{bmatrix} .
$$

Accordingly, it has been found that the weighting coefficients can be obtained from the following update algorithm:

$$
\begin{aligned}
w_i(k) &= w_i(k-1) + \sum_{i=0}^{N-1} \mu_i'(k)|e_i(k)|^{q-2} e_i(k)|z_i(k)|^{p-2} \sum_{n=0}^{N-1} \exp\left(-j2\pi \frac{ni}{N}\right) F(n)\overline{P}_i X(k+n-1) \\
&= w_i(k-1) + \sum_{i=0}^{N-1} \mu_i(k)|e_i(k)|^{q-2} e_i(k)|z_i(k)|^{p-2} (\overline{z}_i(k) - z_i(k))
\end{aligned}
$$

where $\overline{P}_i$ and $\overline{z}_i(k)$ are defined as

$$
\overline{P}_1 = \begin{pmatrix} \dfrac{\partial A_I(v)}{\partial v_1} & 0 \\ 0 & 0 \end{pmatrix}, \quad \overline{P}_2 = \begin{pmatrix} 0 & \dfrac{\partial \theta(v)}{\partial v_2} \\ 0 & 0 \end{pmatrix}, \quad \overline{P}_3 = \begin{pmatrix} 0 & 0 \\ 0 & \dfrac{\partial A_Q(v)}{\partial v_1} \end{pmatrix} .
$$

$$
\overline{z}_i(k) = \sum_{n=0}^{MN-1} F\left(kN + \frac{n}{M}\right) W\left(kN + \frac{n}{M}\right) \overline{X}\left(kN + \frac{n}{M}\right) \exp\left(-j2\pi \frac{in}{MN}\right)
$$

$$
x_i(k) = \begin{cases} \begin{pmatrix} (1 + \Delta g)\,\mathrm{Re}[x(k)] \\ \mathrm{Im}[x(k)] \end{pmatrix} & i = 0 \\[12pt] \begin{pmatrix} \mathrm{Re}[x(k)] \\ \mathrm{Im}[x(k)\exp(j\Delta v)] \end{pmatrix} & i = 1 \\[12pt] \begin{pmatrix} \mathrm{Re}[x(k)] \\ (1 + \Delta g)\,\mathrm{Im}[x(k)] \end{pmatrix} & i = 2 \end{cases} .
$$

In the above equations, $\dfrac{\partial A_I(v)}{\partial v_1}$ and $\dfrac{\partial \theta(v)}{\partial v}$ are values obtained by a differentiation of the output amplitude of the amplifiers 323 in order to control a voltage and a phase shift function of the variable phase shifter 327 with respect to the control voltage v, respectively. Moreover, $\Delta g$ and $\Delta v$ denote small amplitude and phase deviations. The phase shift function can be determined by exploiting the characteristics of the devices, which can be measured. However, the above algorithm is robust against the characteristic deviation of amplifiers and phase shifters. By utilizing analogue signal processing to compress the dynamic range of the signals provided to the analogue to digital converters, any kind of signals provided from arbitrary radio networks can simultaneously be processed. Therefore, the above inventive algorithm increases the flexibility of the multi mode receivers.

It should be noted that the error correcting element applied in the receiver apparatus shown in Fig. 7 is implemented in the radio frequency quasi coherent detector, such that an input signal provided via the output 305 and 307 is weighted by the resulting coefficients of the multiplier 309 and 315 according to a chosen phase shift of the phase shift element 327. Additionally, the amplitude of the obtained signals is adjusted by the means of the variable amplifier 323. Therefore, the means for determining the input signal and the error-correcting element are integrated within the radio frequency quasi-coherent detector.

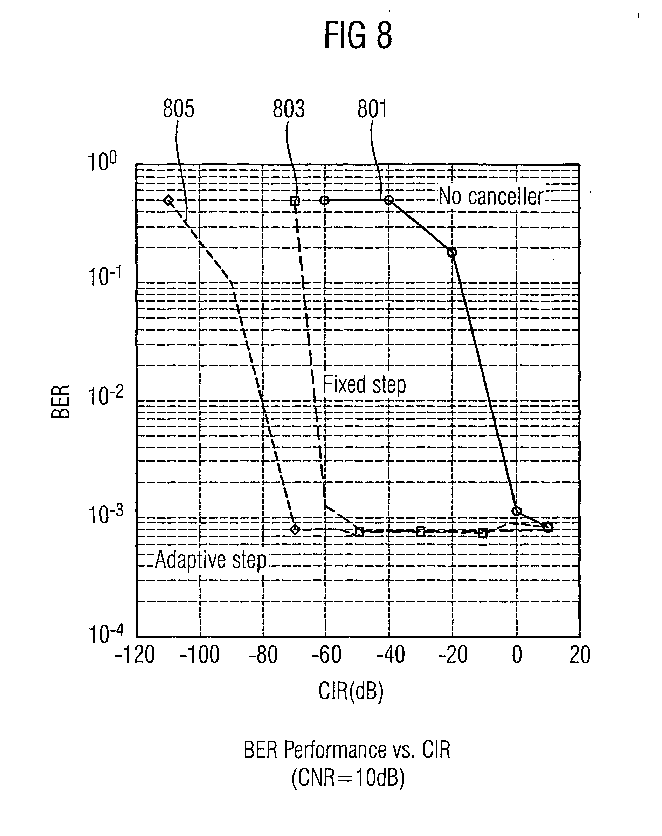

Fig. 8 demonstrates a performance of the inventive apparatus for adaptively correcting an error in an input signal. The apparatus was employed as an image canceller in a two-mode receiver. Fig. 8 demonstrates a bit error rate performance versus channel to interference ratio (CIR) at a channel noise ratio equal to 10 db. Hence, two signals are received simultaneously by a receiver having one radio frequency circuit. Therefore, the performance is obtained by varying the power of interference with respect to a power of the desired signal, which was kept constant. Therefore, the signal to noise ratio (SNR) of the desired signal is constant. Moreover, an OFDM system was employed having a number of sub-carriers equal to 64. Additionally, each sub-carrier modulated belongs to a QPSK modulation (Quadrature Phase Shift Keying). The intermediate frequency was set to 2/T, where T denotes a symbol period of signals provided by the signal to parallel transformer in a transmitter.

The variable frequency quasi-coherent detector used in the receiver introduces an orthogonality error of 10 degrees. The curve 801 demonstrates a performance of the system, wherein no image canceller is applied. As can be seen, the performance is big degrading with an increasing interference power.

The curve 803 demonstrates a performance of a system utilizing the inventive apparatus for adaptively correcting an error in the input signal, wherein a fixed step algorithm described above was applied, the fixed step algorithm being characterized by a fixed iteration step for all sub-carriers, as mentioned before. It can be seen that the fixed step algorithm has a performance which is superior to the performance of the system without any canceller.

The curve 805 demonstrates a system performance where the adaptation step can adaptively be chosen for each sub-carrier as described above. It can be seen that the adaptive step algorithm can extend a flat CIR region even more than the fixed step algorithm. Actually, even at 70 db of CIR, the receiver can demodulate the desired signal without any degradation, when the inventive concept is applied.

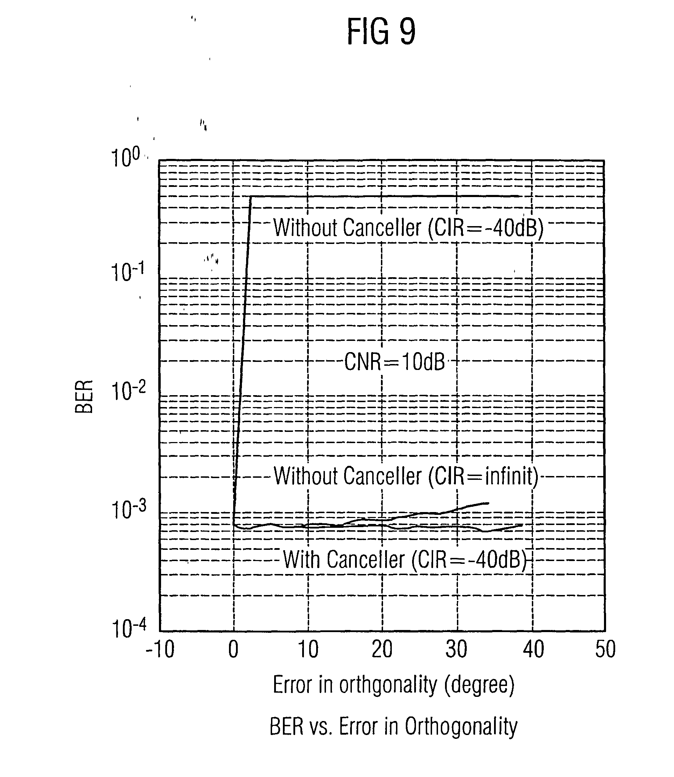

Fig. 9 shows a bit error ratio (BER) performance in accordance with the present invention. The parameters are the same as the parameters used in order to obtain the results presented in Fig. 8, except for the orthogonality error and the CIR. The CIR is set to -40 db and the orthogonality error is variable. Additionally, the performance of the receiver without canceller in an AWGN channel is shown. Obviously, the performance of the receiver without any canceller is degraded even in the presence of a small orthogonality error. Contrary to this degradation, a receiver comprising the inventive interference canceller has a better performance than the receiver without any canceller. The performance may be kept constant even if the orthogonality error is changed from zero degree to about 40 degrees. Even in an AWGN scenario being characterized by a negligible or zero interference environment, the receiver without a canceller has a performance slightly degraded by the orthogonality error. Hence, the inventive algorithms successfully estimate the optimum re-ortho-normalization matrix.

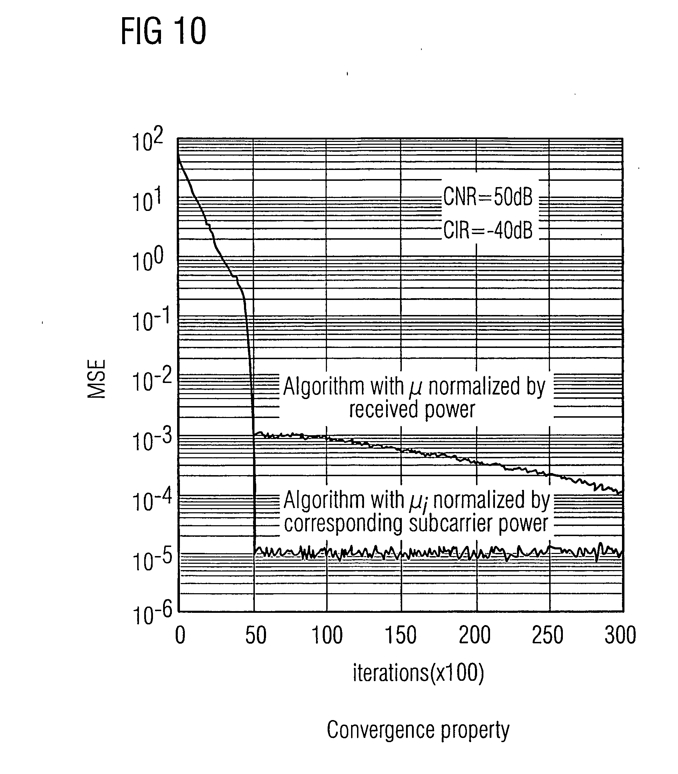

Fig. 10 demonstrates convergence properties in terms of MSE (Mean Squared Error) over a number of iterations, wherein CNR is set to 50 db and CIR is minus 40 db. The remaining parameters are the same as the parameters of the set-up associated with the results shown in Fig. 8. It can be seen that the fixed step algorithms in accordance with the present invention have a convergence floor starting at 5000 iterations, wherein the floor is achieving the optimum as the number of iterations increases. On the other hand, the inventive adaptive step algorithms rapidly achieve the optimum conversions after 5000 of iterations.

Depending on certain implementation requirements, the inventive methods can be implemented in hardware or in software. The implementation can be performed using a digital storage medium, in particular a disk or a CD having electronically readable control signals stored thereon, which can cooperate with a programmable computer system, such that the inventive methods are performed. Generally, the present invention is, therefore, a computer-program product with a program code stored on a machine-readable carrier, the program code performing the inventive method, wherein the computer-program product runs on a computer. In other words, the inventive methods are, therefore, a computer program having a program code for forming the inventive methods, when the computer program runs on a computer.

**Claims**

1. Apparatus for adaptively correcting an error in an input signal on the basis of an adaptation scheme having adaptation steps, wherein the input signal is formed from a receive signal by deriving an in-phase component, hereafter referred to as I-component from the receive signal as a real part of the input signal and by deriving a quadrature component, hereafter referred to as Q-component from the receive signal as an imaginary part of the input signal, wherein the error is an orthogonality error occurring while deriving the I- and Q-component, so that the real part of the input signal is not orthogonal to the imaginary part of the input signal, the adaptation scheme relying on a characteristic property not comprised by the input signal, the apparatus comprising:

    an error correcting element (101; 409) for providing a corrected input signal by weighting the input signal using a set of coefficients, wherein the input signal and the corrected input signal are time domain signals;
    a first transformer (111) for transforming the input signal into a first transformed signal comprising the characteristic property, wherein the first transformer (111) is operative to transform a version of the input signal into the frequency domain to obtain the first transformed signal, wherein the characteristic property is a constant envelope, wherein the first transformed signal has a constant envelope within a predetermined range, when the orthogonality error does not occur and wherein the first transformed signal has a distorted envelope comprising a superposition of the constant envelope and an error envelope when the orthogonality error occurs;
    a second transformer (121; 423) for transforming the corrected input signal into a second transformed signal comprising the characteristic property, wherein the second transformer (121) is operative to transform a version of the corrected signal into the frequency domain to obtain the second transformed signal;
    means (117; 427; 731) for determining a new .set of coefficients to be used in a next adaptation step from the set of coefficients and from the first and second transformed signal by exploiting the characteristic property, wherein the means (117) for determining the set of new coefficients to be used in the next adaptation step is operative to determine the set of new coefficients by exploiting the constant envelope property in an error free case.

2. Apparatus in accordance with claim 1, wherein the input signal is formed from a receive signal by deriving an in-phase component from the receive signal as a real part of the input signal and by deriving a quadrature component from the receive signal as an imaginary part of the input signal, wherein the error is an orthogonality error occurring while the derivation of the I- and Q-component, so that the real part of the input signal is not orthogonal to the imaginary part of the input signal, wherein the error correcting element (101; 409) is operative to provide the corrected input signal having a reduced orthogonality error.

3. Apparatus in accordance with claim 2, wherein the input signal comprises a set of input points, each input point having a real value and an imaginary value, so that the set of input points comprises a set of real values corresponding to the real part of the input signal, and a set of imaginary values corresponding to the imaginary part of the input signal, wherein the corrected input signal comprises a set of corrected points, each corrected input point having a real value and an imaginary value, so that the set of corrected points comprises a set of real values corresponding to the real part of the corrected input signal, and a set of imaginary values corresponding to the imaginary part of the corrected input signal, wherein the set of input points comprises an erroneous input point having the orthogonality error, and
wherein the error correcting element (101; 409) is operative to weight the erroneous input point by the set of coefficients to provide a corrected point of the corrected input signal having a reduced orthogonality error.

4. Apparatus in accordance with claim 3, wherein the erroneous input point is a vector, and wherein the set of coefficients is arranged in a matrix, and
wherein the error-correcting element (101; 409) is operative to perform a matrix by vector multiplication to provide a corrected point of the set of corrected points.

5. Apparatus in accordance with claim 4, wherein the first transformer (111) is operative to oversample the input signal by an oversampling factor to provide an oversampled input signal as the version of the input signal, and
wherein the second transformer (121) is operative to over sample the corrected input signal by the over sampling factor to provide an over sampled corrected input signal as the version of the corrected input signal.

6. Apparatus in accordance with claim 4 or 5, wherein the input signal and the corrected input signal are intermediate frequency signals,
   wherein the first transformer (111) comprises a first down converter (213) for providing a down-converted version of the input signal as the version of the input signal, and
   wherein the second transformer (121) comprises a second down converter (213) for providing a down-converted version of the corrected input signal as the version of the corrected input signal.

7. Apparatus in accordance with claims 4 to 6, wherein the first transformer (111) comprises a fast Fourier transformer or a discrete Fourier transformer to transform the version of the input signal into frequency domain to obtain the first transformed signal, and/or wherein the second transformer (121) comprises a fast Fourier transformer or a discrete Fourier transformer to transform the version of the corrected input signal into a frequency domain to obtain the second transformed signal.

8. Apparatus in accordance with claim 1 to 7, wherein the means (117) for determining the set of new coefficients is operative to perform a constant modulus algorithm or a minimum mean squared error algorithm to obtain the set of new coefficients to be used in the next adaptation step.

9. Receiver apparatus, comprising:

   means for providing a receive signal;
   means (201) for deriving an input signal from the receive signal, the input signal having a real part and an imaginary part,
   wherein the means (201) for deriving is operative to derive an in-phase component from the receive signal as the real part of the' input signal, and to derive a quadrature component from the receive signal as the imaginary part of the input signal, wherein the means (201) for deriving introduces an orthogonality error, so that the real part of the input signal and the imaginary part of the input signal are not orthogonal to each other; and
   the apparatus for adaptively correcting the orthogonality error in accordance with anyone of claims 1 to 8.

10. Method for adaptively correcting an error in an input signal on the basis of an adaptation scheme relying on a characteristic property not comprised by the input signal, wherein the input signal is formed from a receive signal by deriving an in-phase component from the receive signal as a real part of the input signal and by deriving a quadrature component from the receive signal as an imaginary part of the input signal, wherein the error is an orthogonality error occurring while deriving the I- and Q-component, so that the real part of the input signal is not orthogonal to the imaginary part of the input signal, the method comprising the following steps of:

    Providing a corrected input signal by weighting the input signal using a set of coefficients, wherein the input signal and the corrected input signal are time domain signals;
    Transforming the input signal into a first transformed signal comprising the characteristic property, wherein a first transformer (111) is operative to transform a version of the input signal into the frequency domain to obtain the first transformed signal, wherein the characteristic property is a constant envelope, wherein the first transformed signal has a constant envelope within a predetermined range, when the orthogonality error does not occur and wherein the first transformed signal has a distorted envelope comprising a superposition of the constant envelope and an error enveloped when the orthogonality error occurs;
    Transforming the corrected input signal into a second transformed signal comprising the characteristic property, wherein a second transformer (121) is operative to transform a version of the corrected signal into the frequency domain to obtain the second transformed signal; and
    determining a new set of coefficients to be used in a next adaptation step from the set of coefficients and from the first and second transformed signal by exploiting the characteristic property, wherein a means (117) for determining the set of new coefficients to be used in the next adaptation step is operative to determine the set of new coefficients by exploiting the constant envelope property in an error free case.

11. Method for processing a receive signal, the method comprising the following steps of:

    Providing a receive signal;
    Deriving an input signal from the receive signal, the input signal having a real part and an imaginary part, wherein the step of deriving the input signal comprises the step of deriving an in-phase component from the receive signal as the real part of the input signal, and the step of deriving a quadrature component as the imaginary part of the input signal, wherein during the derivation process an orthogonality error occurs, so that the real part of the input signal and the imaginary part of the input signal are not orthogonal to each other; and Adaptively correcting the orthogonality error using the method in accordance with claim 10.

12. Computer program having a program code for performing the method in accordance with claim 10 or the method in accordance with claim 11, when the program runs on a computer.

**Patentansprüche**

1. Vorrichtung zum adaptiven Korrigieren eines Fehlers bei einem Eingangssignal auf der Basis eines Adaptionsschemas, das Adaptionsschritte aufweist, wobei das Eingangssignal aus einem Empfangssignal gebildet wird, indem eine In-Phase-Komponente, die im Folgenden als I-Komponente bezeichnet wird, von dem Empfangssignal als ein Realteil des Eingangssignals abgeleitet wird und indem eine Quadraturkomponente, die im Folgenden als Q-Komponente bezeichnet wird, von dem Empfangssignal als ein Imaginärteil des Eingangssignals abgeleitet wird, wobei der Fehler ein Orthogonalitätsfehler ist, der auftritt, während die I- und Q-Komponente abgeleitet werden, so dass der Realteil des Eingangssignals nicht orthogonal zu dem Imaginärteil des Eingangssignals ist, wobei sich das Adaptionsschema auf eine charakteristische Eigenschaft stützt, die nicht in dem Eingangssignal enthalten ist, wobei die Vorrichtung folgende Merkmale aufweist:

ein Fehlerkorrekturelement (101; 409) zum Liefern eines korrigierten Eingangssignals durch ein Gewichten des Eingangssignals unter Verwendung eines Satzes von Koeffizienten, wobei das Eingangssignal und das korrigierte Eingangssignal Zeitbereichsignale sind;
einen ersten Transformator (111) zum Umwandeln des Eingangssignals in ein erstes umgewandeltes Signal, das die charakteristische Eigenschaft aufweist, wobei der erste Transformator (111) wirksam ist, um eine Version des Eingangssignals in den Frequenzbereich umzuwandeln, um das erste umgewandelte Signal zu erhalten, wobei die charakteristische Eigenschaft eine konstante Hüllkurve ist, wobei das erste umgewandelte Signal eine konstante Hüllkurve innerhalb eines vorbestimmten Bereichs aufweist, wenn der Orthogonalitätsfehler nicht auftritt, und wobei das erste umgewandelte Signal eine verzerrte Hüllkurve aufweist, die eine Überlagerung der konstanten Hüllkurve und einer Fehlerhüllkurve aufweist, wenn der Orthogonalitätsfehler auftritt;
einen zweiten Transformator (121; 423) zum Umwandeln des korrigierten Eingangssignals in ein zweites umgewandeltes Signal, das die charakteristische Eigenschaft aufweist, wobei der zweite Transformator (121) wirksam ist, um eine Version des korrigierten Signals in den Frequenzbereich umzuwandeln, um das zweite umgewandelte Signal zu erhalten;
eine Einrichtung (117; 427; 731) zum Bestimmen eines neuen Satzes von Koeffizienten, die bei einem nächsten Adaptionsschritt verwendet werden sollen, aus dem Satz von Koeffizienten und aus dem ersten und zweiten umgewandelten Signal durch ein Ausnutzen der charakteristischen Eigenschaft, wobei die Einrichtung (117) zum Bestimmen des Satzes von neuen Koeffizienten, die bei dem nächsten Adaptionsschritt verwendet werden sollen, wirksam ist, um den Satz von neuen Koeffizienten durch ein Ausnutzen der Konstanthüllkurveneigenschaft in einem fehlerfreien Fall zu bestimmen.

2. Vorrichtung gemäß Anspruch 1, bei der das Eingangssignal aus einem Empfangssignal gebildet wird, indem eine In-Phase-Komponente von dem Empfangssignal als ein Realteil des Eingangssignals abgeleitet wird und indem eine Quadraturkomponente von dem Empfangssignal als ein Imaginärteil des Eingangssignals abgeleitet wird, wobei der Fehler ein Orthogonalitätsfehler ist, der während der Ableitung der I- und Q-Komponente auftritt, so dass der Realteil des Eingangssignals nicht orthogonal zu dem Imaginärteil des Eingangssignals ist, wobei das Fehlerkorrekturelement (101; 409) wirksam ist, um das korrigierte Eingangssignal zu liefern, das einen verringerten Orthogonalitätsfehler aufweist.

3. Vorrichtung gemäß Anspruch 2, bei der das Eingangssignal einen Satz von Eingangspunkten aufweist, wobei jeder Eingangspunkt einen Realwert und einen Imaginärwert aufweist, so dass der Satz von Eingangspunkten einen Satz von Realwerten, der dem Realteil des Eingangssignals entspricht, und einen Satz von Imaginärwerten, der dem Imaginärteil des Eingangssignals entspricht, aufweist, wobei das korrigierte Eingangssignal einen Satz von korrigierten Punkten aufweist, wobei jeder korrigierte Eingangspunkt einen Realwert und einen Imaginärwert aufweist, so dass der Satz von korrigierten Punkten einen Satz von Realwerten, der dem Realteil des korrigierten Eingangssignals entspricht, und einen Satz von Imaginärwerten, der dem Imaginärteil des korrigierten Eingangssignals entspricht, aufweist, wobei der Satz von Eingangspunkten einen fehlerhaften Eingangspunkt aufweist, der den Orthogonalitätsfehler aufweist, und

wobei das Fehlerkorrekturelement (101; 409) wirksam ist, um den fehlerhaften Eingangspunkt durch den Satz von Koeffizienten zu gewichten, um einen korrigierten Punkt des korrigierten Eingangssignals zu liefern, das einen verringerten Orthogonalitätsfehler aufweist.

4. Vorrichtung gemäß Anspruch 3, bei der der fehlerhafte Eingangspunkt ein Vektor ist, und wobei der Satz von Koeffizienten in einer Matrix angeordnet ist, und

   wobei das Fehlerkorrekturelement (101; 409) wirksam ist, um eine Matrix durch Vektormultiplikation durchzuführen, um einen korrigierten Punkt des Satzes von korrigierten Punkten zu liefern.

5. Vorrichtung gemäß Anspruch 4, bei der der erste Transformator (111) wirksam ist, um das Eingangssignal um einen Überabtastfaktor überabzutasten, um ein überabgetastetes Eingangssignal als die Version des Eingangssignals zu liefern, und

   wobei der zweite Transformator (121) wirksam ist, um das korrigierte Eingangssignal um den Überabtastfaktor überabzutasten, um ein überabgetastetes korrigiertes Eingangssignal als die Version des korrigierten Eingangssignals zu liefern.

6. Vorrichtung gemäß Anspruch 4 oder 5, bei der das Eingangssignal und das korrigierte Eingangssignal Zwischenfrequenzsignale sind,

   wobei der erste Transformator (111) einen ersten Abwärtsumsetzer (213) zum Liefern einer heruntergemischten Version des Eingangssignals als die Version des Eingangssignals aufweist, und

   wobei der zweite Transformator (121) einen zweiten Abwärtsumsetzer (213) zum Liefern einer heruntergemischten Version des korrigierten Eingangssignals als die Version des korrigierten Eingangssignals aufweist.

7. Vorrichtung gemäß einem der Ansprüche 4 bis 6, bei der der erste Transformator (111) einen schnellen Fourier-Transformator oder einen diskreten Fourier-Transformator aufweist, um die Version des Eingangssignals in einen Frequenzbereich umzuwandeln, um das erste umgewandelte Signal zu erhalten, und/oder bei der der zweite Transformator (121) einen schnellen Fourier-Transformator oder einen diskreten Fourier-Transformator aufweist, um die Version des korrigierten Eingangssignals in einen Frequenzbereich umzuwandeln, um das zweite umgewandelte Signal zu erhalten.

8. Vorrichtung gemäß einem der Ansprüche 1 bis 7, bei der die Einrichtung (117) zum Bestimmen des Satzes von neuen Koeffizienten wirksam ist, um einen Konstantmodulalgorithmus oder einen Algorithmus eines minimalen mittleren quadrierten Fehlers durchzuführen, um den Satz von neuen Koeffizienten zu erhalten, die bei dem nächsten Adaptionsschritt verwendet werden sollen.

9. Empfängervorrichtung, die folgende Merkmale aufweist:

   eine Einrichtung zum Liefern eines Empfangssignals;

   eine Einrichtung (201) zum Ableiten eines Eingangssignals von dem Empfangssignal, wobei das Eingangssignal einen Realteil und einen Imaginärteil aufweist,

   wobei die Einrichtung (201) zum Ableiten wirksam ist, um eine In-Phase-Komponente von dem Empfangssignal als den Realteil des Eingangssignals abzuleiten und eine Quadraturkomponente von dem Empfangssignal als den Imaginärteil des Eingangssignals abzuleiten, wobei die Einrichtung (201) zum Ableiten einen Orthogonalitätsfehler einführt, so dass der Realteil des Eingangssignals und der Imaginärteil des Eingangssignals nicht orthogonal zueinander sind; und

   die Vorrichtung zum adaptiven Korrigieren des Orthogonalitätsfehlers gemäß einem der Ansprüche 1 bis 8.

10. Verfahren zum adaptiven Korrigieren eines Fehlers bei einem Eingangssignal auf der Basis eines Adaptionsschemas, das sich auf eine charakteristische Eigenschaft stützt, die nicht in dem Eingangssignal enthalten ist, wobei das Eingangssignal aus einem Empfangssignal gebildet wird, indem eine In-Phase-Komponente von dem Empfangssignal als ein Realteil des Eingangssignals abgeleitet wird und indem eine Quadraturkomponente von dem Empfangssignal als ein Imaginärteil des Eingangssignals abgeleitet wird, wobei der Fehler ein Orthogonalitätsfehler ist, der auftritt, während die I- und Q-Komponente abgeleitet werden, so dass der Realteil des Eingangssignals nicht orthogonal zu dem Imaginärteil des Eingangssignals ist, wobei das Verfahren folgende Schritte aufweist:

   Liefern eines korrigierten Eingangssignals durch ein Gewichten des Eingangssignals unter Verwendung eines Satzes von Koeffizienten, wobei das Eingangssignal und das korrigierte Eingangssignal Zeitbereichsignale sind;

Umwandeln des Eingangssignals in ein erstes umgewandeltes Signal, das die charakteristische Eigenschaft aufweist, wobei ein erster Transformator (111) wirksam ist, um eine Version des Eingangssignals in den Frequenzbereich umzuwandeln, um das erste umgewandelte Signal zu erhalten, wobei die charakteristische Eigenschaft eine konstante Hüllkurve ist, wobei das erste umgewandelte Signal eine konstante Hüllkurve innerhalb eines vorbestimmten Bereichs aufweist, wenn der Orthogonalitätsfehler nicht auftritt, und wobei das erste umgewandelte Signal eine verzerrte Hüllkurve aufweist, die eine Überlagerung der konstanten Hüllkurve und einer Fehlerhüllkurve aufweist, wenn der Orthogonalitätsfehler auftritt;

Umwandeln des korrigierten Eingangssignals in ein zweites umgewandeltes Signal, das die charakteristische Eigenschaft aufweist, wobei ein zweiter Transformator (121) wirksam ist, um eine Version des korrigierten Signals in den Frequenzbereich umzuwandeln, um das zweite umgewandelte Signal zu erhalten; und

Bestimmen eines neuen Satzes von Koeffizienten, die bei einem nächsten Adaptionsschritt verwendet werden sollen, aus dem Satz von Koeffizienten und aus dem ersten und zweiten umgewandelten Signal durch ein Ausnutzen der charakteristischen Eigenschaft, wobei eine Einrichtung (117) zum Bestimmen des Satzes von neuen Koeffizienten, die bei dem nächsten Adaptionsschritt verwendet werden sollen, wirksam ist, um den Satz von neuen Koeffizienten durch ein Ausnutzen der Konstanthüllkurveneigenschaft in einem fehlerfreien Fall zu bestimmen.

11. Verfahren zum Verarbeiten eines Empfangssignals, wobei das Verfahren die folgenden Schritte aufweist:

Liefern eines Empfangssignals;

Ableiten eines Eingangssignals von dem Empfangssignal, wobei das Eingangssignal einen Realteil und einen Imaginärteil aufweist, wobei der Schritt des Ableitens des Eingangssignals den Schritt eines Ableitens einer In-Phase-Komponente von dem Empfangssignal als den Realteil des Eingangssignals und den Schritt eines Ableitens einer Quadraturkomponente als den Imaginärteil des Eingangssignals aufweist, wobei während des Ableitungsprozesses ein Orthogonalitätsfehler auftritt, so dass der Realteil des Eingangssignals und der Imaginärteil des Eingangssignals nicht orthogonal zueinander sind; und

adaptives Korrigieren des Orthogonalitätsfehlers unter Verwendung des Verfahrens gemäß Anspruch 10.

12. Computerprogramm mit einem Programmcode zum Durchführen des Verfahrens gemäß Anspruch 10 oder des Verfahrens gemäß Anspruch 11, wenn das Programm auf einem Computer läuft.

**Revendications**

1. Appareil destiné à corriger adaptativement une erreur dans un signal d'entrée sur base d'un schéma d'adaptation présentant des étapes d'adaptation, dans lequel le signal d'entrée est formé à partir d'un signal de réception en dérivant un composant en phase, ci-après appelé composant I, du signal de réception comme partie réelle du signal d'entrée et en dérivant un composant en quadrature, ci-après appelé composant Q, du signal de réception comme partie imaginaire du signal d'entrée, dans lequel l'erreur est une erreur d'orthogonalité se produisant pendant la dérivation des composants I et Q, de manière que la partie réelle du signal d'entrée n'est pas orthogonale à la partie imaginaire du signal d'entrée, le schéma d'adaptation étant basé sur une propriété caractéristique non comprise dans le signal d'entrée, l'appareil comprenant :

un élément de correction d'erreur (101 ; 409) destiné à fournir un signal d'entrée corrigé en pondérant le signal d'entrée au moyen d'un ensemble de coefficients, dans lequel le signal d'entrée et le signal d'entrée corrigé sont des signaux dan s le domaine du temps ;

un premier transformateur (111) destiné à transformer le signal d'entrée en un premier signal transformé comprenant la propriété caractéristique, dans lequel le premier transformateur (111) est opérationnel pour transformer une version du signal d'entrée au domaine de la fréquence, pour obtenir le premier signal transformé, dans lequel la propriété caractéristique est une enveloppe constante, dans lequel le premier signal transformé présente une enveloppe constante dans une plage prédéterminée lorsque l'erreur d'orthogonalité ne se produit pas et dans lequel le premier signal transformé présente une enveloppe distorsionnée comprenant une superposition de l'enveloppe constante et d'une enveloppe d'erreur lorsque se produit l'erreur d'orthogonalité ;

un deuxième transformateur (121 ; 423) destiné à transformer le signal d'entrée corrigé en un deuxième signal transformé comprenant la propriété caractéristique, dans lequel le deuxième transformateur (121) est opérationnel pour transformer une version du signal corrigé au domaine de la fréquence, pour obtenir le deuxième signal transformé ;

un moyen (117 ; 427 ; 731) destiné à déterminer un nouvel ensemble de coefficients à utiliser dans une étape

**EP 1 665 710 B1**

d'adaptation suivante à partir de l'ensemble de coefficients et à partir du premier et du deuxième signal transformé en utilisant la propriété caractéristique, dans lequel le moyen (117) destiné à déterminer l'ensemble de nouveaux coefficients à utiliser dans l'étape d'adaptation suivante est opérationnel pour déterminer l'ensemble de nouveaux coefficients en utilisant la propriété de l'enveloppe constante dans un cas exempt d'erreur.

2. Appareil selon la revendication 1, dans lequel le signal d'entrée est formé à partir d'un signal de réception en dérivant un composant en phase du signal de réception comme partie réelle du signal d'entrée et en dérivant un composant en quadrature du signal de réception comme partie imaginaire du signal d'entrée, dans lequel l'erreur est une erreur d'orthogonalité se produisant pendant la dérivation des composants I et Q, de manière que la partie réelle du signal d'entrée n'est pas orthogonale à la partie imaginaire du signal d'entrée, dans lequel l'élément de correction d'erreur (101; 409) est utilisé pour fournir le signal d'entrée corrigé présentant une erreur d'orthogonalité réduite.

3. Appareil selon la revendication 2, dans lequel le signal d'entrée comprend un ensemble de points d'entrée, chaque point d'entrée présentant une valeur réelle et une valeur imaginaire, de manière que l'ensemble de points d'entrée comprend un ensemble de valeurs réelles correspondant à la partie réelle du signal d'entrée, et un ensemble de valeurs imaginaires correspondant à la partie imaginaire du signal d'entrée, dans lequel le signal d'entrée corrigé comprend un ensemble de points corrigés, chaque point d'entrée corrigé présentant une valeur réelle et une valeur imaginaire, de manière que l'ensemble de points corrigés comprend un ensemble de valeurs réelles correspondant à la partie réelle du signal d'entrée corrigé, et un ensemble de valeurs imaginaires correspondant à la partie imaginaire du signal d'entrée corrigé, dans lequel l'ensemble de points d'entrée comprend un point d'entrée erroné présentant l'erreur d'orthogonalité, et
dans lequel l'élément de correction d'erreur (101; 409) est opérationnel pour pondérer le point d'entrée erroné par l'ensemble de coefficients, pour fournir un point corrigé du signal d'entrée corrigé présentant une erreur d'orthogonalité réduite.

4. Appareil selon la revendication 3, dans lequel le point d'entrée erroné est un vecteur, et dans lequel l'ensemble de coefficients est disposé dans une matrice, et
dans lequel l'élément de correction d'erreur (101; 409) est opérationnel pour effectuer une matrice par multiplication vectorielle, pour fournir un point corrigé de l'ensemble de points corrigés.

5. Appareil selon la revendication 4, dans lequel le premier transformateur (111) est opérationnel pour suréchantillonner le signal d'entrée par un facteur de suréchantillonnage, pour fournir un signal d'entrée suréchantillonné comme version du signal d'entrée, et
dans lequel le deuxième transformateur (121) est opérationnel pour suréchantillonner le signal d'entrée corrigé par le facteur de suréchantillonnage, pour fournir un signal d'entrée corrigé suréchantillonné comme version du signal d'entrée corrigé.

6. Appareil selon la revendication 4 ou 5, dans lequel le signal d'entrée et le signal d'entrée corrigé sont des signaux de fréquence intermédiaire,
dans lequel le premier transformateur (111) comprend un premier convertisseur en abaissement (213) pour fournir une version convertie en abaissement du signal d'entrée comme version du signal d'entrée, et
dans lequel le deuxième transformateur (121) comprend un deuxième convertisseur en abaissement (213) pour fournir une version convertie en abaissement du signal d'entrée corrigé comme version du signal d'entrée corrigé.

7. Appareil selon les revendications 4 à 6, dans lequel le premier transformateur (111) comprend un transformateur de Fourier rapide ou un transformateur de Fourier discret pour transformer la version du signal d'entrée au domaine de la fréquence, pour obtenir le premier signal transformé, et/ou dans lequel le deuxième transformateur (121) comprend un transformateur de Fourier rapide ou un transformateur de Fourier discret pour transformer la version du signal d'entrée corrigé au domaine de la fréquence, pour obtenir le deuxième signal transformé.

8. Appareil selon la revendication 1 à 7, dans lequel le moyen (117) destiné à déterminer l'ensemble de nouveaux coefficients est opérationnel pour effectuer un algorithme du module constant ou un algorithme d'erreur quadratique moyenne minimale, pour obtenir l'ensemble de nouveaux coefficients à utiliser dans l'étape d'adaptation suivante.

9. Appareil récepteur comprenant :

un moyen destiné à fournir un signal de réception ;
un moyen (201) destiné à dériver un signal d'entrée du signal de réception, le signal d'entrée présentant une

27

partie réelle et une partie imaginaire,

dans lequel le moyen (201) de dérivation est opérationnel pour dériver un composant en phase du signal de réception comme partie réelle du signal d'entrée, et pour dériver un composant en quadrature du signal de réception comme partie imaginaire du signal d'entrée, dans lequel le moyen (201) de dérivation introduit une erreur d'orthogonalité, de manière que la partie réelle du signal d'entrée et la partie imaginaire du signal d'entrée ne sont pas orthogonales l'une par rapport à l'autre ; et

l'appareil destiné à corriger adaptativement l'erreur d'orthogonalité selon l'une quelconque des revendications 1 à 8.

**10.** Procédé pour corriger adaptativement une erreur dans un signal d'entrée sur base d'un schéma d'adaptation basé sur une propriété caractéristique non comprise dans le signal d'entrée, dans lequel le signal d'entrée est formé à partir d'un signal de réception en dérivant un composant en phase du signal de réception comme partie réelle du signal d'entrée et en dérivant un composant en quadrature du signal de réception comme partie imaginaire du signal d'entrée, où l'erreur est une erreur d'orthogonalité se produisant pendant la dérivation des composants I et Q, de manière que la partie réelle du signal d'entrée n'est pas orthogonale à la partie imaginaire du signal d'entrée, le procédé comprenant les étapes suivantes consistant à :

fournir un signal d'entrée corrigé en pondérant le signal d'entrée au moyen d'un ensemble de coefficients, dans lequel le signal d'entrée et le signal d'entrée corrigé sont des signaux dans le domaine du temps;

transformer le signal d'entrée en un premier signal transformé comprenant la propriété caractéristique, dans lequel un premier transformateur (111) est opérationnel pour transformer une version du signal d'entrée au domaine de la fréquence, pour obtenir le premier signal transformé, dans lequel la propriété caractéristique est une enveloppe constante, dans lequel le premier signal transformé présente une enveloppe constante dans une plage prédéterminée lorsque l'erreur d'orthogonalité ne se produit pas et dans lequel le premier signal transformé présente une enveloppe distorsionnée comprenant une superposition de l'enveloppe constante et d'une enveloppe d'erreur lorsque se produit l'erreur d'orthogonalité ;

transformer le signal d'entrée corrigé en un deuxième signal transformé comprenant la propriété caractéristique, dans lequel un deuxième transformateur (121) est opérationnel pour transformer une version du signal corrigé au domaine de la fréquence, pour obtenir le deuxième signal transformé ; et

déterminer un nouvel ensemble de coefficients à utiliser dans une étape d'adaptation suivante à partir de l'ensemble de coefficients et à partir du premier et du deuxième signal transformé en utilisant la propriété caractéristique, dans lequel un moyen (117) destiné à déterminer l'ensemble de nouveaux coefficients à utiliser dans l'étape d'adaptation suivante est opérationnel pour déterminer l'ensemble de nouveaux coefficients en utilisant la propriété de l'enveloppe constante dans un cas exempt d'erreur.

**11.** Procédé de traitement d'un signal de réception, le procédé comprenant les étapes suivantes consistant à :

fournir un signal de réception ;

dériver un signal d'entrée du signal de réception, le signal d'entrée présentant une partie réelle et une partie imaginaire, dans lequel l'étape de dérivation du signal d'entrée comprend l'étape de dérivation d'un composant en phase du signal de réception comme partie réelle du signal d'entrée, et l'étape de dérivation d'un composant en quadrature comme partie imaginaire du signal d'entrée, dans lequel se produit pendant le processus de dérivation une erreur d'orthogonalité, de manière que la partie réelle du signal d'entrée et la partie imaginaire du signal d'entrée ne sont pas orthogonales l'une par rapport à l'autre ; et

corriger adaptativement l'erreur d'orthogonalité au moyen du procédé selon la revendication 10.

**12.** Programme d'ordinateur présentant un code de programme pour réaliser le procédé selon la revendication 10 ou le procédé selon la revendication 11, lorsque le programme est exécuté sur un ordinateur.

FIG 1

Input signal

101

Corrected input
signal

103

107

**Error correcting
element**

113

109

123

121

115

119

**First
transformer**

**Means for determining
new set of coefficients**

**Second
transformer**

111

I. Transformed
signal

117

II. Transformed
signal

EP 1 665 710 B1

# FIG 3

FIG 4

FIG 5

EP 1 665 710 B1

FIG 6

601

609

605

609

611

603

RF unit

System I, II, ...&M

Baseband
unit

607

C-QCD: Complex Quasi-Coherent Detector

FIG 12 multicarrier image canceller

# FIG 8

BER Performance vs. CIR
(CNR=10dB)

# FIG 9

BER vs. Error in Orthogonality

# FIG 10

Convergence property

FIG 11

EP 1 665 710 B1

# FIG 12

1201

1207 1209 1205 1211 1213

1215

1203

1217

RF unit → Baseband unit

System I

System II

Switch

controller

1219

# FIG 13 conventional multimode receiver(2)

1201

1209 1213 1301

1215 1303

1203

RF unit

(System I)

(System II)

Switch

Baseband unit

1301

controller

1305

# FIG 14

1401

1403

1405

1407

RF unit
(System I, II, ... &M)

Baseband
unit

## FIG 15

```
     1501    1503   1505   1507    1509   1511   1515      1517
                                                    ┌──────────┐
      ┌─────────┐ ┌────┐ ┌─────┐ ┌─────┐ │ Hilbert │ │          │ ──○
   ○─▶│RF-Filter│▶│D/C │▶│ LPF │▶│ A/D │▶│transfo- │▶│ detector │
      └─────────┘ └────┘ └─────┘ └─────┘ │ rmation │ │          │ ──○
                                          └─────────┘ └──────────┘
   1521                                          1513            1519
```

## FIG 16

```
     1501    1503   1601   1507    1509   1511   1515     1517
                                                    ┌──────────┐
      ┌─────────┐ ┌────┐ ┌─────┐ ┌─────┐ │ Hilbert │ │          │ ──○
   ○─▶│RF-Filter│▶│D/C │▶│ BPF │▶│ A/D │▶│transfo- │▶│ detector │
      └─────────┘ └────┘ └─────┘ └─────┘ │ rmation │ │          │ ──○
                                          └─────────┘ └──────────┘
   1521                                          1513            1519
```

## FIG 17

```
     1501    1503   1601   1507    1701   1703   1707    1709
                                          ┌──────────┐ ┌──────────┐
      ┌─────────┐ ┌────┐ ┌─────┐ ┌─────┐ │ Quasi-   │ │          │ ──○
   ○─▶│RF-Filter│▶│D/C │▶│ BPF │▶│ A/D │▶│ Coherent │▶│ detector │
      └─────────┘ └────┘ └─────┘ └─────┘ │ Detector │ │          │ ──○
                                          └──────────┘ └──────────┘
   1521                                         │  1705        │
                                               ⊗◀──────────┐  1711
                                          1715  │          │
                                                │      ┌──────┐
                                                └──────│ Loop │
                                                       │filter│──── 1713
                                                       └──────┘
```

# FIG 18

BPF

$f_c$

frequency response of a hybrid in a receiver

$f_{IF}$        $f_c-f_{IF}$        $f_c+f_{IF}=f_{RF}$

FIG 19